# EUROPEAN PATENT SPECIFICATION

(11) **EP 4 089 491 B1**
(45) Date of publication and mention of the grant of the patent: **06.05.2026**
(21) Application number: 20912329.8
(22) Date of filing: 30.12.2020
(51) Int. Cl.: G05B 15/02

(54) **SMART DEVICE CONTROL SYSTEM, METHOD, AND APPARATUS, SMART GATEWAY, AND STORAGE MEDIUM**
INTELLIGENTES GERÄTESTEUERUNGSSYSTEM, VERFAHREN UND VORRICHTUNG, INTELLIGENTES GATEWAY UND SPEICHERMEDIUM
SYSTÈME, PROCÉDÉ ET APPAREIL DE COMMANDE DE DISPOSITIF INTELLIGENT, PASSERELLE INTELLIGENTE, ET SUPPORT DE STOCKAGE

(30) Priority: 08.01.2020 CN 202010019530
(43) Date of publication of application: 16.11.2022
(73) Proprietor: BOE Technology Group Co., Ltd., Beijing 100015 (CN)
(72) Inventor: ZHANG, Qian, Beijing 100176 (CN); ZHAO, Junjie, Beijing 100176 (CN); ZHAO, Yanqiu, Beijing 100176 (CN); SU, Jing, Beijing 100176 (CN)
(74) Representative: AWA Sweden AB
(86) International application number: PCT/CN2020/141521
(87) International publication number: WO 2021/139586

(56) References cited:
- CN-A- 105 093 947
- CN-A- 108 021 319
- CN-A- 108 898 803
- CN-A- 109 895 123
- US-A1- 2017 017 218
- US-A1- 2018 122 199
- US-A1- 2019 103 987

## Description

### TECHNICAL FIELD

The present disclosure relates to a field of an intelligent device technology, in particular to a system, a method and an apparatus of controlling an intelligent device, an intelligent gateway, and a storage medium

### BACKGROUND

Intelligent devices have been widely used. At present, when controlling an intelligent device among a plurality of intelligent devices in a same control system, other intelligent devices are not taken into account.

US2017/017218A1 discloses a method and an apparatus provided for controlling one or more intelligent devices. In the method, the apparatus stores configuration information that includes at least one identification that identifies at least one intelligent device, an execution operation corresponding to each intelligent device, and an execution condition corresponding to each execution operation. When a target execution condition is satisfied, the apparatus determines a target intelligent device and a target execution operation corresponding to the target execution condition by querying the configuration information according to the target execution condition. The apparatus then instructs the target intelligent device to perform the target execution operation.

### SUMMARY

The invention is set out by the appended set of claims. In a first aspect, an embodiment of the present disclosure provides a method of controlling an intelligent device, including: receiving first monitoring data provided by a first sensor; determining a relationship between the first monitoring data and a preset target monitoring value; determining, from a plurality of preset action resources, an action resource containing a trigger condition matched with the relationship as a first action resource; extracting an execution instruction from the first action resource, and transmitting the execution instruction to a first intelligent device related with the first action resource; and monitoring a first execution effect of the first intelligent device related with the first action resource according to the first monitoring data, and turning on a second intelligent device related with the first intelligent device or turning off the first intelligent device according to the first execution effect.

For example, the method further includes: extracting an effective time period of a second action resource from the second action resource and extracting an effective time period of the first action resource from the first action resource, in response to the first monitoring data provided by the first sensor triggering the second action resource; and continuing an execution of the first action resource and terminating an execution of the second action resource in response to a current time instant falling within the effective time period of the first action resource; or executing the second action resource and terminating an execution of the first action resource in response to a current time instant falling within the effective time period of the second action resource.

The first action resource includes a first action effect information, and the first action effect information includes a first effect monitor period, a first effect initial value, a first effect current value, a first effect target value and a first effect control trend, and the monitoring a first execution effect of the first intelligent device related with the first action resource according to the first monitoring data includes: updating the first effect initial value in the first action effect information according to the first monitoring data, and updating the first effect target value in the first action effect information according to the target monitoring value; and receiving the first monitoring data according to the first effect monitor period in the first action effect information, updating the first effect current value in the first action effect information according to the received first monitoring data, determining an estimated achievement value at a current time instant according to the first effect initial value and the first effect target value, determining whether the first execution effect is out of control or under control according to a relationship between the updated first effect current value and the estimated achievement value at the current time instant, and updating a determination result to a status value of the first effect control trend in the first action effect information; and continuing to perform a next cycle of detection in response to determining that the first execution effect is under control; or turning on the second intelligent device or selecting another action resource from the plurality of preset action resources as the first action resource according to the first execution effect, in response to determining that the first execution effect is out of control.

For example, the first action effect information further includes a first effect predicted achievement period; the determining an estimated achievement value at a current time instant according to the first effect initial value and the first effect target value includes: determining an estimated achievement effect according to the first effect initial value, the first effect target value, the first effect predicted achievement period and the first effect monitor period; and determining the estimated achievement value at the current time instant according to the estimated achievement effect and a time difference between a current time instant and an initial time instant, wherein the initial time instant is a time instant of transmitting the execution instruction in the first action resource.

For example, the first action effect information further includes a first effect control parameter, and the determining whether the first execution effect is out of control or under control according to a relationship between the updated first effect current value and the estimated achievement value at the current time instant includes: determining an upper limit of the estimated achievement value at the current time instant and a lower limit of the estimated achievement value at the current time instant according to the estimated achievement value at the current time instant and the first effect control parameter in the first action effect information; and determining whether the first execution effect is out of control or not according to a relationship between the updated first effect current value and the upper limit of the estimated achievement value at the current time instant and a relationship between the updated first effect current value and the lower limit of the estimated achievement value at the current time instant.

For example, the first action resource further includes a second action effect information; the method further includes receiving second monitoring data provided by a second sensor, and the monitoring a first execution effect of the first intelligent device related with the first action resource according to the first monitoring data and turning off the first intelligent device according to the first execution effect includes: monitoring a second execution effect of the first intelligent device related with the first action resource according to the second monitoring data, and updating the second action effect information in the first action resource corresponding to the second execution effect; and determining that the second execution effect is out of control and turning off the first intelligent device according to the second execution effect, in response to a difference between the second execution effect and a preset effect exceeding a preset range.

For example, the method further includes: triggering a second action resource by the received first monitoring data provided by the first sensor, wherein the second action resource includes a third action effect information, and the third action effect information includes a second effect target value; and the method further includes: determining a first effect trend corresponding to the first action resource according to a trigger condition in the first action resource and the first effect target value in the first action effect information in the first action resource, and determining a second effect trend corresponding to the second action resource according to a trigger condition in the second action resource and the second effect target value in the third action effect information in the second action resource; and determining whether a status value of a no-same-effect parameter in the second action resource is True or not and whether a status value of a no-opposite-effect parameter is False or not, in response to the first effect trend corresponding to the first action resource being opposite to the second effect trend corresponding to the second action resource; determining whether an execution object in the first action resource is the same as an execution object in the second action resource or not, in response to determining that the status value of the no-same-effect parameter is True and the status value of the no-opposite-effect parameter is False; continuing an execution of the first action resource and terminating an execution of the second action resource in response to determining that the execution object in the first action resource is the same as the execution object in the second action resource, or continuing an execution of the first action resource and starting an execution of the second action resource in response to determining that the execution object in the first action resource is different from the execution object in the second action resource.

For example, the first action effect information is stored as a sub-resource of the first action resource, or as a parameter of the first action resource; and the trigger condition in the first action resource is stored as a parameter of the first action resource.

For example, the first action resource further includes a first verification information, and the first verification information is stored as a sub-resource of the first action resource.

For example, the method further includes: receiving a trigger instruction input by a user, and extracting the preset target monitoring value from the received trigger instruction.

In a second aspect, an embodiment of the present disclosure further provides an apparatus of controlling an intelligent device, including: a data receiving module configured to receive first monitoring data provided by a first sensor; an action resource determination module configured to determine a relationship between the first monitoring data and a preset target monitoring value, determine, from a plurality of preset action resources, an action resource containing a trigger condition matched with the relationship as a first action resource, extract an execution instruction from the first action resource, and transmit the execution instruction to a first intelligent device related with the first action resource; and a monitoring module configured to monitor a first execution effect of the first intelligent device related with the first action resource according to the first monitoring data, and turn on a second intelligent device related with the first intelligent device or turn off the first intelligent device according to the first execution effect.

For example, the monitoring module is further configured to: extract an effective time period of a second action resource from the second action resource and extract an effective time period of the first action resource from the first action resource, in response to the first monitoring data provided by the first sensor triggering the second action resource; and continue an execution of the first action resource and terminate an execution of the second action resource in response to a current time instant falling within the effective time period of the first action resource; or execute the second action resource and terminate an execution of the first action resource in response to the current time instant falling within the effective time period of the second action resource.

For example, the data receiving module is further configured to receive second monitoring data provided by a second sensor.

In a third aspect, an embodiment of the present disclosure further provides an intelligent gateway, including: a processor; and a memory communicatively connected to the processor, wherein at least one instruction is stored in the memory, and the at least one instruction, when executed by the processor, is configured to cause the processor to implement the method of controlling the intelligent device described above.

In a fourth aspect, an embodiment of the present disclosure further provides a system of controlling an intelligent device, including: the intelligent gateway as described above; a first sensor communicatively connected to the intelligent gateway and configured to continuously acquire first monitoring data and transmit the first monitoring data to the intelligent gateway; a terminal device communicatively connected to the intelligent gateway and configured to provide a trigger instruction to the intelligent gateway, wherein the trigger instruction contains a target monitoring value of the same type as the monitoring data.

For example, the system further includes: a second sensor communicatively connected to the intelligent gateway and configured to continuously acquire second monitoring data and transmit the second monitoring data to the intelligent gateway.

In a fifth aspect, an embodiment of the present disclosure further provides a computer-readable storage medium having a computer program therein, wherein the computer program, when executed by a processor, is configured to cause the processor to implement the method of controlling the intelligent device as described above.

### BRIEF DESCRIPTION OF THE DRAWINGS

The above and/or additional aspects and advantages of the present disclosure will become apparent and easy to understand from the following description of embodiments in conjunction with the accompanying drawings, in which:
FIG. 1 shows a schematic structural diagram of a system of controlling an intelligent device according to an embodiment of the present disclosure;
FIG. 2 shows a schematic flowchart of a method of controlling an intelligent device according to an embodiment of the present disclosure;
FIG. 3A shows a schematic signaling diagram of a method of registering various devices according to an embodiment of the present disclosure;
FIG. 3B shows a schematic framework diagram of an association relationship between various resources provided by an embodiment of the present disclosure;
FIG. 4A shows a schematic signaling diagram of a sensor providing data according to an embodiment of the present disclosure;
FIG. 4B shows a schematic framework diagram of a container resource and a container instance according to an embodiment of the present disclosure;
FIG. 5 shows a schematic framework diagram of an example of a first action resource and a second action resource according to an embodiment of the present disclosure;
FIG. 6A shows a schematic flowchart of an action resource-based method of controlling an intelligent device according to an embodiment of the present disclosure;
FIG. 6B shows a schematic flowchart of a method of monitoring an action effect according to real-time monitoring data according to an embodiment of the present disclosure;
FIG. 6C shows a schematic signaling diagram of an example of an action resource-based method of controlling an intelligent device according to an embodiment of the present disclosure;
FIG. 7A shows a schematic flowchart of another action resource-based method of controlling an intelligent device according to an embodiment of the present disclosure;
FIG. 7B shows a schematic diagram of an cooling average power of an air conditioner being out of control according to an embodiment of the disclosure;
FIG. 7C shows a schematic signaling diagram of an example of another action resource-based method of controlling an intelligent device according to an embodiment of the present disclosure;
FIG. 8A shows a schematic flowchart of yet another action resource-based method of controlling an intelligent device according to an embodiment of the present disclosure;
FIG. 8B shows a schematic signaling diagram of an example of yet other action resource-based method of controlling an intelligent device according to an embodiment of the present disclosure;
FIG. 9A shows a schematic flowchart of still another action resource-based method of controlling an intelligent device according to an embodiment of the present disclosure;
FIG. 9B shows a schematic signaling diagram of an example of still other action resource-based method of controlling an intelligent device according to an embodiment of the present disclosure;
FIG. 10 shows a schematic structural framework diagram of an apparatus of controlling an intelligent device according to an embodiment of the present disclosure; and
FIG. 11 shows a schematic framework diagram of a structure of an intelligent gateway according to an embodiment of the present disclosure.

### DETAILED DESCRIPTION OF EMBODIMENTS

The present disclosure will be described in detail below. Examples of embodiments of the present disclosure are shown in the accompanying drawings, in which the same or similar reference numerals indicate the same or similar components or components having the same or similar functions throughout. In addition, detailed descriptions of known technologies are omitted if they are not necessary to illustrated features of the present disclosure. Embodiments described below with reference to the accompanying drawings are exemplary for explaining the present disclosure, and should not be construed as limiting the present disclosure.

Those skilled in the art may understand that unless otherwise defined, all terms (including technical and scientific terms) used herein have the same meanings as those generally understood by those ordinary skilled in the art to which the present disclosure belongs. It should also be understood that terms such as those defined in a general dictionary should be understood to have a meaning consistent with the meaning in the context of the related art, and unless specifically defined as herein, it would not be interpreted in an idealized or overly formal sense.

Those skilled in the art may understand that unless specifically stated, the singular forms "a", "an", "said" and "the" used herein may also include the plural forms. It should be further understood that the word "including" and "containing" used in the specification of the present disclosure refers to the presence of the described features, integers, steps, operations, elements and/or components, but does not exclude the presence or addition of one or more other features, integers, steps, operations, elements, components, and/or their groups. It should be understood that when an element is referred to as being "connected" or "coupled" to another element, it may be directly connected or coupled to the other element, or there may be an intermediate element. In addition, "connection" as used herein may include a wireless connection. The expression "and/or" as used herein includes all or any unit of one or more related listed items and all combinations thereof.

A system, a method and an apparatus of controlling an intelligent device, an intelligent gateway and a storage medium provided by the present disclosure are intended to solve a technical problem in the related art.

A concept of the present disclosure is described below with embodiments, but is not limited to embodiments defined below.

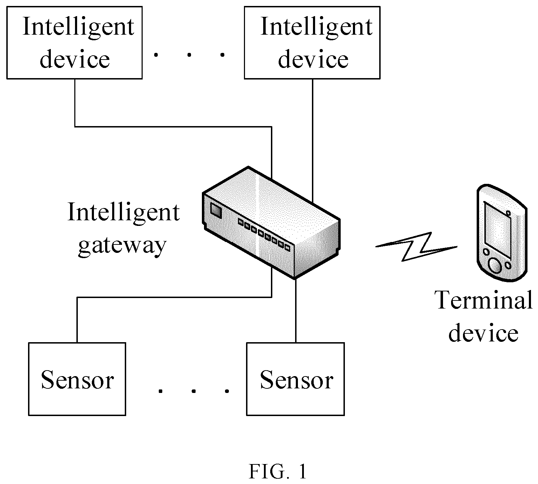

An embodiment of the present disclosure provides a system of controlling an intelligent device. As shown in FIG. 1, the system includes an intelligent gateway, at least one sensor, at least one intelligent device, and at least one terminal device.

The sensor may be a sensor for detecting an external environmental parameter for a user, a sensor for detecting an internal environmental parameter of a device, or a sensor for monitoring a running status of a device, such as a temperature sensor, a humidity sensor, a pressure sensor, a gas concentration sensor, a light intensity sensor, a particle sensor, a cooling power sensor, etc. The at least one sensor may be the same type of sensor or at least two types of sensors. Each type of sensors may include one or more sensors.

Each type of sensor is used to continuously acquire monitoring data in an internal or external environment of the device and report the monitoring data to the intelligent gateway. For example, the monitoring data may include at least one of an actual temperature value in an environment, an actual cooling power value of an air conditioner, an actual humidity value, an actual luminance value, an actual particle density value, switch data of an intelligent lighting device, or a movement speed or position data of a robot cleaner, etc.

The intelligent device may be an intelligent home, an intelligent industrial device or other types of devices, such as an intelligent air conditioner, an intelligent cooling fan, an intelligent door magnetic device, an intelligent window magnetic device, an intelligent humidifier, an intelligent lighting device, an intelligent air purifier, a robot cleaner, etc. in an intelligent home scenario. Each type of intelligent device may include at least one intelligent device. The at least one intelligent device may be at least one intelligent device in a type of intelligent device (e.g., a plurality of cooling fans), or at least one intelligent device in a plurality of types of intelligent devices (e.g., intelligent air conditioner, intelligent cooling fan). Each intelligent device may have an intelligent function or may be a combination of an ordinary non-intelligent device and an intelligent switch electrically connected to the ordinary non-intelligent device. For such combination, a communication connection between the intelligent device and the intelligent gateway described below is actually a communication connection between the intelligent gateway and the intelligent switch. For example, the intelligent gateway may be communicatively connected to an intelligent air conditioner switch, and the intelligent air conditioner switch is communicatively connected to a non-intelligent air conditioner. For another example, the intelligent gateway may be communicatively connected to an intelligent cooling fan switch, and the intelligent cooling fan switch is communicatively connected to a non-intelligent cooling fan.

The communication connection in the present disclosure may include a wired connection and a wireless connection. The intelligent device may be connected to the intelligent gateway in a wireless manner. A wireless connection method may include at least one of a wireless local area network, a mobile communication network, an NFC (Near Field Communication) connection, or a Bluetooth connection. The wireless local area network may be a WiFi (Wireless Fidelity) local area network or the like. The mobile communication network may be a 3G (3rd-Generation wireless telephone technology) network or an LTE (Long Term Evolution) network or the like.

In embodiments of the present disclosure, one, two or more terminal devices may be provided. The terminal device may have a communication function, a display function and a human-computer interaction function. The terminal device may be one of an intelligent phone, a tablet computer, a two-in-one computer, a notebook computer, a PDA (Personal Digital Assistant), or the like.

The terminal device may be communicatively connected to the intelligent gateway. For example, the terminal device may be connected to the intelligent gateway in a wireless manner. A wireless connection method may include at least one of a wireless local area network, a mobile communication network, an NFC connection, or a Bluetooth connection. The terminal device is used to transmit a trigger instruction to the intelligent gateway after receiving the trigger instruction.

The intelligent gateway in embodiments of the present disclosure is mainly used to: determine a trigger condition satisfied by real-time monitoring data and a target monitoring value in the trigger instruction, and determine a first action resource containing the trigger condition; determine an execution instruction in the first action resource and transmit the execution instruction to a first intelligent device corresponding to the first action resource; monitor a first execution effect corresponding to the first action resource according to the real-time monitoring data, and turn on a second intelligent device related with the first intelligent device or turn off the first intelligent device according to a monitoring result for the first execution effect; or resolve a conflict between a second action resource triggered later and the first action resource according to subsequent real-time monitoring data.

For example, another sensor of embodiments of the present disclosure is used to continuously acquire another monitoring data and provide it to the intelligent gateway.

For example, the intelligent gateway is further used to receive registrations of various sensors, various intelligent devices and various terminal devices, receive and save data provided by various sensors, and create various action resources (action) and various action effect resources (actionDesiredEffect) related to the intelligent devices. etc. This content will be introduced in detail later, and will not be repeated here.

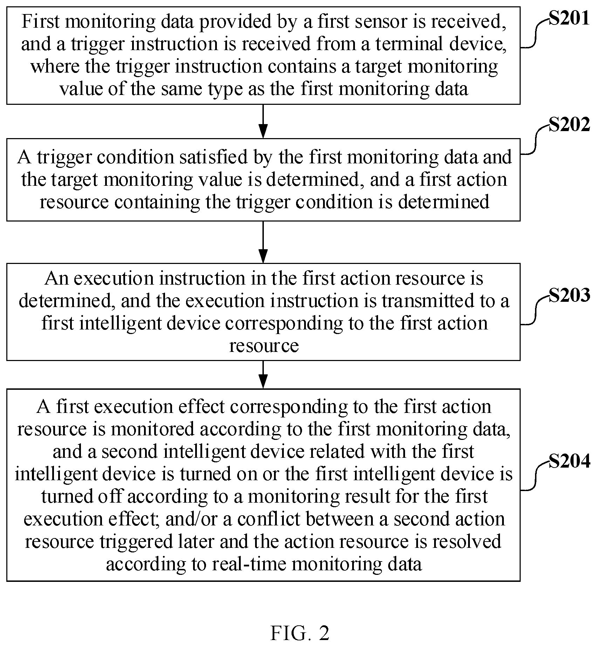

Based on the same concept, an embodiment of the present disclosure provides a method of controlling an intelligent device, which may be performed by a control device on a network side, such as a processor, a server, a gateway or other network devices. A schematic flowchart of the method is shown in FIG. 2, and the method includes S201 to S204.

In S201, first monitoring data provided by a first sensor is received, and a preset target monitoring value of the same type as the first monitoring data is extracted from a trigger instruction.

In some embodiments, the trigger instruction may be preset in the intelligent gateway, or may be input by a user from a terminal device.

The target monitoring value of the same type as the first monitoring data refers to data of the same data type as the first monitoring data, and the data is target monitoring data. In other words, the target monitoring value of the same type as the first monitoring data refers to a target monitoring value corresponding to the first monitoring data.

For example, the first monitoring data may be temperature data of a surrounding environment, and the target monitoring value may be a target temperature value desired by the user.

In S202, a trigger condition satisfied by the first monitoring data and the target monitoring value is determined, and a first action resource containing the trigger condition is determined.

In S203, an execution instruction in the first action resource is determined, and the execution instruction is transmitted to a first intelligent device corresponding to the first action resource.

In S204, a first execution effect corresponding to the first action resource is monitored according to the first monitoring data, and a second intelligent device related with the first intelligent device is turned on or the first intelligent device is turned off according to a monitoring result for the first execution effect; and/or a conflict between a second action resource triggered later and the first action resource is resolved according to the first monitoring data.

In embodiments of the present disclosure, the first action resource contains an identification of the first intelligent device, a trigger condition for the first intelligent device, an execution instruction for the first intelligent device, and a first action effect resource recording the first execution effect of the first action resource, etc., and the first action effect resource contains an identification of the related second intelligent device. The monitoring of the execution effect of the first intelligent device corresponding to the first action resource is introduced. The first intelligent device or the related second intelligent device is controlled or the conflict between the action resources is resolved according to the monitoring result for the execution effect, which is equivalent to achieving a joint control of the intelligent devices according to the execution effect of the action resources.

The intelligent gateway is illustrated below by way of example.

A device registration is required before the above steps are performed. A method of registering the sensor, the intelligent device and the terminal device in embodiments of the present disclosure will be described below. A method of creating the action resource, a content of the action resource, and an action resource-based method of controlling an intelligent device will be further introduced below.

For example, the method of registering the sensor, the intelligent device and the terminal device may include the following steps.

Each sensor transmits a registration request containing an identification of the sensor to the intelligent gateway, each intelligent device transmits a registration request containing an identification of the intelligent device to the intelligent gateway, and each terminal device transmits a registration request containing an identification of the terminal device to the intelligent gateway. In other words, the sensor, the intelligent device and the terminal device respectively transmit the registration requests to the intelligent gateway, and the registration requests contain respective identification information.

Upon receiving the registration requests, the intelligent gateway parses out the identification of the sensor, the identification of the intelligent device and the identification of the terminal device from the registration requests, and stores the identification of the sensor, the identification of the intelligent device and the identification of the terminal device under an identification name of the intelligent gateway, which is equivalent to establishing a subordination relationship between the identification of the sensor and the identification of the intelligent gateway, establishing a subordination relationship between the identification of the intelligent device and the identification of the intelligent gateway, and establishing a subordination relationship between the identification of the terminal device and the identification of the intelligent gateway, so that an association relationship (i.e., binding) between the identification of the sensor, the identification of the intelligent device and the identification of the terminal device is established by subordinate to the identification of the intelligent gateway.

The device identification may be used as a unique identification of the device in the system. For example, the identification of the sensor and the identification of the intelligent device include a unique identifier. For example, the unique identifier of the intelligent device may be a UUID (Universally Unique Identifier), or a MAC (Media Access Control) address. The identification of the sensor and the identification of the intelligent device may further include at least one of an installation position information, a device type, a device model, a manufacturer information, a date of manufacture, and the like.

For example, the identification of the terminal device may include a unique identifier and/or an IMEI (International Mobile Equipment Identity) communication number of the terminal device. For example, if the terminal device is provided with a mobile communication card or an apparatus capable of storing a communication number, such as a SIM (Subscriber Identity Module) card, a nano-SIM card or a micro-SIM card, etc., the identification of the terminal device may further include a communication number.

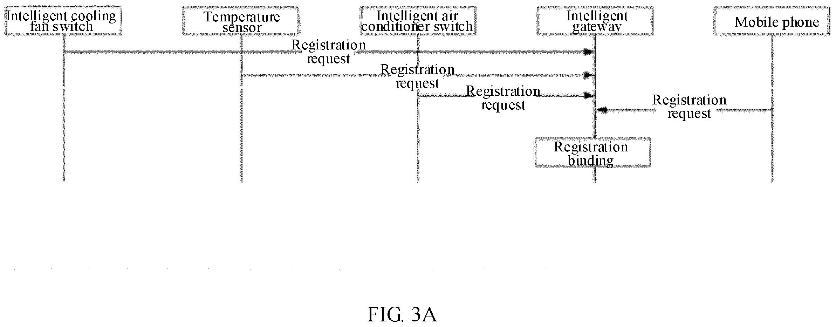

The following is an example for introducing the method of registering various devices in embodiments of the present disclosure. A schematic signaling diagram of the method is shown in FIG. 3A, in which a temperature sensor transmits a registration request containing an identification of the temperature sensor to the intelligent gateway (the identification of the intelligent gateway is CSE), an intelligent air conditioner switch transmits a registration request containing an identification of the intelligent air conditioner switch to the intelligent gateway, an intelligent cooling fan switch transmits a registration request containing an identification of the intelligent cooling fan switch to the intelligent gateway, and a mobile phone transmits a registration request containing an identification of the mobile phone to the intelligent gateway.

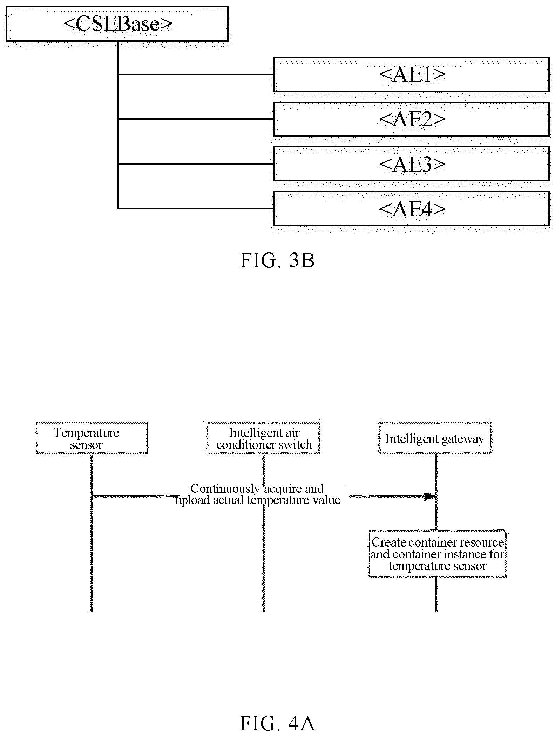

As shown in FIG. 3B, upon receiving the registration requests, the intelligent gateway parses out the identification of the temperature sensor, the identification of the intelligent air conditioner switch, the identification of the intelligent cooling fan switch and the identification of the mobile phone respectively from the registration requests; and creates a temperature sensor resource AE1 according to the identification of the temperature sensor, creates an intelligent air conditioner switch resource AE2 according to the identification of the intelligent air conditioner switch, creates an intelligent cooling fan switch resource AE4 according to the identification of the intelligent cooling fan switch, creates a mobile phone resource AE3 according to the identification of the mobile phone, and stores respective identifications in respective resources. An intelligent gateway base resource CSEBase is created, and the temperature sensor resource AE1, the intelligent air conditioner switch resource AE2, the intelligent cooling fan switch resource AE4 and the mobile phone resource AE3 act as subordinate resources of the intelligent gateway base resource CSEBase to establish an association relationship with the intelligent gateway base resource CSEBase. The temperature sensor resource AE1, the intelligent air conditioner switch resource AE2, the intelligent cooling fan switch resource AE4 and the mobile phone resource AE3 are associated (that is, bound) through the intelligent gateway base resource CSEBase.

The method of creating the action resource and the content of the action resource in embodiments of the present disclosure will be described below.

The intelligent gateway may create N action resources, for example, a first action resource action1 to an Nth action resource actionN, wherein N is a positive integer.

The action resource contains an action resource parameter and an action effect (actionDesiredEffect) resource.

The action resource parameter includes a trigger condition of the action resource, an execution instruction of the action resource and an execution object of the action resource.

The action effect resource includes at least one of: an effect resource identification effectResourceID, an effect initial value effectInitialValue, an effect current value effectCurrentValue, an effect target value effectTargetValue, an effect monitor period effectMornitorPeriod, an effect predicted achievement period effectPredictedTime, a nonlinear effect parameter nonLinearParameter, an effect control parameter effectControlParameter, an effect control trend effectControlStatus, a related device involved switch relatedDeviceInvolved or related action involved switch relatedActionInvolved, a related device involved list relatedDeviceList or related action involved list relatedActionList, a related device involved setting relatedDeviceOption or related action involved setting relatedActionOption, a reverse action switch relatedReverseActionInvolved, or an effective time period effectTime. A reverse action in the present disclosure refers to an operation opposite to an operation corresponding to the execution instruction.

For example, the action resource may further include a verification (dependency) resource.

In embodiments of the present disclosure, when creating the action resource, the intelligent gateway may set various contents of the action resource according to experimental data, experience data, historical operation data and/or user input data to generate the action resource. For example, the various action resources may be created at the same time, or created at intervals. The interval is not limited and may be, for example, minutes, hours, days, weeks, months, or years. A continuous addition or updating of action resource is supported in the present disclosure.

For example, in embodiments of the present disclosure, the action effect resource is stored as a sub-resource of the action resource, or is stored as a parameter of the action resource. The trigger condition is stored as a parameter of the action resource.

For example, in embodiments of the present disclosure, the verification resource is stored as a sub-resource of the action resource.

The action resource, the parameter thereof and the sub-resource thereof will be exemplarily introduced below with reference to the accompanying drawings.

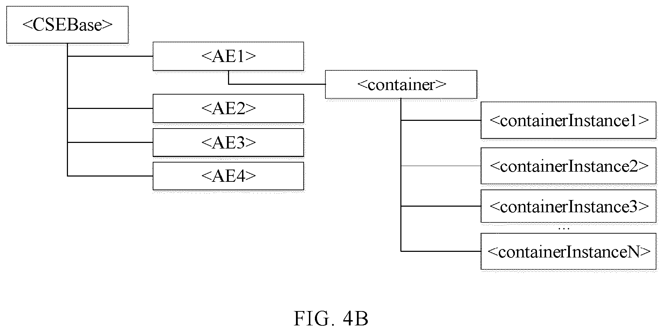

As shown in FIG. 4A and FIG. 4B, a temperature sensor installed in a living room continuously acquires actual living room temperature values and continuously provides the temperature values to the intelligent gateway. Upon receiving the first actual living room temperature values, the intelligent gateway creates a container resource under an identification name of the temperature sensor, and creates N container instances in the container resource, such as containerInstance1 to containerInstanceN, wherein N is a positive integer. The intelligent gateway stores successively-received N real-time actual living room temperature values into the N container instances respectively. For example, overwriting and storing may be performed on the container instance when more than N actual living room temperature values are received. For example, an (N+i)^{th} actual living room temperature value may overwrite a value in an i^{th} container instance and may be stored in the i^{th} container instance, wherein i is a positive integer less than or equal to N.

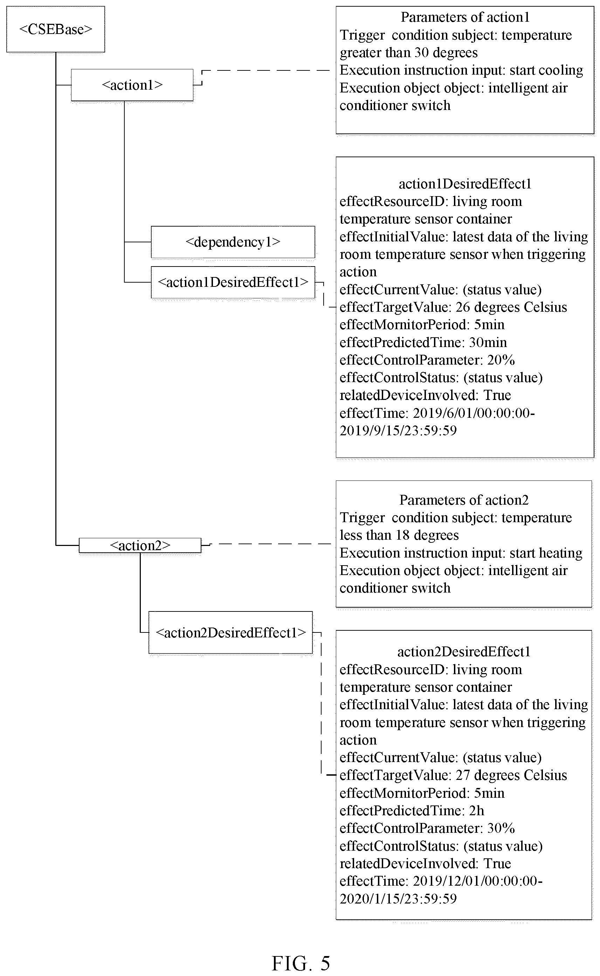

As shown in FIG. 5, the intelligent gateway creates the first action resource action1 and the second action resource action2.

The first action resource action1 contains a first verification resource dependency1 (which may also be referred to as a first verification information) and a first action effect resource action1DesiredEffect1 (which may also be referred to as a first action effect information).

Parameters of the first action resource action1 includes a trigger condition subject, an execution instruction input, and an execution object object. The trigger condition subject, the execution instruction input and the execution object object are respectively set to: temperature greater than 30 degrees, start cooling, and intelligent air conditioner switch.

The first action effect resource action1DesiredEffect1 of the first action resource action1 includes parameters of: effect resource identification effectResourceID, effect initial value effectInitialValue, effect current value effectCurrentValue, effect target value effectTargetValue, effect monitor period effectMornitorPeriod, effect predicted achievement period effectPredictedTime, effect control parameter effectControlParameter, effect control trend effectControlStatus, related device involved switch relatedDeviceInvolved, and effective time period effectTime.

For example, a status value of the effect resource identification effectResourceID refers to a unique identification of an action effect resource that is different from other action effect resources; a status value of the effect initial value effectInitialValue refers to monitoring data at an initial time instant in a status of monitoring an execution effect corresponding to an action effect resource; a status value of the effect current value effectCurrentValue refers to real-time monitoring data at a current time instant in a status of monitoring an execution effect corresponding to the action effect resource; a status value of the effect target value effectTargetValue refers to a target monitoring value in a trigger instruction; and a status value of the effect monitor period effectMornitorPeriod refers to a total monitoring duration of the execution effect corresponding to the action effect resource.

A status value of the effect predicted achievement period effectPredictedTime refers to a duration of each monitoring period in the total monitoring duration, and the total monitoring duration includes at least one monitoring period.

A status value of the effect control parameter effectControlParameter refers to an adjustable parameter value.

A status value of the effect control trend effectControlStatus may be under control or out of control, which reflects whether a difference between the effect current value and the effect target value satisfies a control condition of the execution effect corresponding to the action effect resource or not within the total monitoring duration.

The related device involved switch relatedDeviceInvolved reflects whether the second intelligent device related with the first intelligent device needs to be involved or not. If so, a status value of the related device involved switch is True. If not, the status value of the related device involved switch is False.

A status value of the effective time period effectTime refers to a time period during which the execution effect corresponding to the action effect resource needs to be monitored. If the current time instant falls within the time period, it is determined that the execution effect corresponding to the action effect resource needs to be monitored. If the current time instant does not fall within the time period, it is determined that the execution effect corresponding to the action effect resource does not need to be monitored.

The values corresponding to the above parameters in the first action effect resource action1DesiredEffect1 of the first action resource action1 include: a living room temperature sensor container, latest data provided by the living room temperature sensor when the action is triggered, status value, 26 degrees Celsius, 5min (minutes), 30min, 20%, status value, True, 2019/06/01/00:00:00-2019/09/15/23:59:59. A related content of the status value of the effect current value effectCurrentValue and a related content of the status value of the effect control trend effectControlStatus will be described in detail later, which will not be described here.

For example, the second action resource action2 contains a first action effect resource action2DesiredEffect1 (also referred to as a third action effect information). Verification information is not configured. Parameters of the second action resource action2 includes a trigger condition subject, an execution instruction input and an execution object object. The trigger condition subject, the execution instruction input and the execution object object are respectively set to: temperature less than 18 degrees, start heating, and intelligent air conditioner switch.

The first action effect resource action2DesiredEffect1 of the second action resource action2 includes parameters of: effect resource identification effectResourceID, effect initial value effectInitialValue, effect current value effectCurrentValue, effect target value effectTargetValue, effect monitor period effectMornitorPeriod, effect predicted achievement period effectPredictedTime, effect control parameter effectControlParameter, effect control trend effectControlStatus, related device involved switch relatedDeviceInvolved, and effective time period effectTime.

Values corresponding to the above parameters in the first action effect resource action2DesiredEffect1 of the second action resource action2 include: living room temperature sensor container, latest data provided by the living room temperature sensor when the action is triggered, status value, 27 degrees Celsius, 5min, 2h (hours), 30%, status value, True, 2019/12/01/00:00:00-2020/01/15/23:59:59.

An action resource-based method of controlling an intelligent device will be described below.

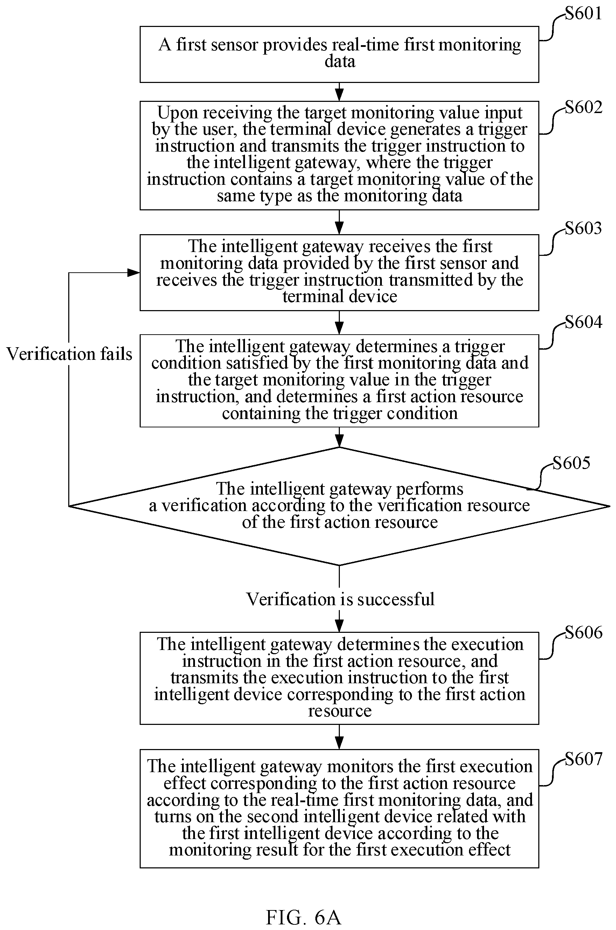

FIG. 6A shows a schematic flowchart of the action resource-based method of controlling the intelligent device, which includes steps S601 to S607.

In S601, a first sensor provides first monitoring data.

Step S601 starts before S602 and lasts after S607, until a turn-off instruction issued by the intelligent gateway is received.

The first sensor may provide values by various methods. For example, one method is to provide an acquired value at time intervals, and another method is to provide a value when a change of the value acquired by the first sensor exceeds a preset threshold.

In S602, upon receiving the target monitoring value input by the user, the terminal device generates a trigger instruction and transmits the trigger instruction to the intelligent gateway. The trigger instruction contains a target monitoring value of the same type as the monitoring data.

For example, upon receiving the target monitoring value input by the user, the terminal device may create a trigger instruction, carry the target monitoring value in the trigger instruction, and transmit the trigger instruction carrying the target monitoring value to the intelligent gateway.

For example, upon receiving the target temperature value input by the user, the terminal device may create a trigger instruction, carry the target temperature value in the trigger instruction, and transmit the trigger instruction carrying the target temperature value to the intelligent gateway.

In S603, the intelligent gateway receives the first monitoring data provided by the first sensor and receives the trigger instruction transmitted by the terminal device.

In S604, the intelligent gateway determines a trigger condition satisfied by the first monitoring data and the target monitoring value in the trigger instruction, and determines a first action resource containing the trigger condition.

In S605, the intelligent gateway performs a verification according to the first verification resource of the first action resource. If the verification fails, the process jumps to step S603. If the verification is successful, step S606 is performed.

For example, the intelligent gateway performing the verification according to the first verification resource of the first action resource may include: determining whether an opposite-effect intelligent device to the first intelligent device is being executed or not, and if so, determining that the verification fails and terminating a transmission of the execution instruction to the first intelligent device of the first action resource, and then ending the process or jumping to step S603, or if not, determining that the verification is successful and performing step S606.

For example, the first intelligent device may be an intelligent air conditioner, and the opposite-effect intelligent device is an intelligent window magnetic device or intelligent door magnetic device. After the action resource of the intelligent air conditioner is triggered, the intelligent gateway performs a verification according to the verification resource of the action resource, including: determining whether the intelligent window magnetic device or intelligent door magnetic device having an opposite effect to the intelligent air conditioner is being executed, and if so, determining that a window corresponding to the intelligent window magnetic device is opened or a door corresponding to the intelligent door magnetic device is opened, then determining that the verification fails and terminating a transmission of the execution instruction to the intelligent air conditioner of the action resource, and then ending the process or jumping to step S603; or if not, determining that the verification is successful and performing step S606.

In S606, the intelligent gateway determines the execution instruction in the first action resource, and transmits the execution instruction to the first intelligent device corresponding to the first action resource.

In S607, the intelligent gateway monitors the first execution effect corresponding to the first action resource according to the real-time first monitoring data, and turns on the second intelligent device related with the first intelligent device according to the monitoring result for the first execution effect.

For example, the execution effect corresponding to the action resource in the present disclosure mainly includes: a degree of conformity between the real-time monitoring data acquired and provided by the sensor and the target monitoring value after the execution instruction in the action resource is executed by the intelligent device corresponding to the action resource. For example, within a preset time period, whether the real-time monitoring data and the target monitoring value may satisfy a preset condition or not.

For example, if the real-time monitoring data and the target monitoring value satisfy the preset condition within a preset time period, the monitoring result in the present disclosure is determined as under control; otherwise, the monitoring result is determined as out of control.

For example, monitoring the first execution effect corresponding to the first action resource according to the real-time first monitoring data includes: updating a first effect initial value in the first action effect resource corresponding to the first execution effect according to the real-time first monitoring data when the first action resource is executed; updating a first effect target value in the first action effect resource according to the target monitoring value; receiving the first monitoring data according to a first effect monitor period in the first action effect resource and updating a first effect current value in the first action effect resource; determining an estimated achievement value at the current time instant according to the first effect initial value and the first effect target value; determining whether the first execution effect is out of control according to the updated first effect current value and the estimated achievement value at the current time instant and updating a determination result to a status value of a first effect control trend in the first action effect resource; continuing to perform a next cycle of detection if the execution effect is under control; or determining whether the related second intelligent device or the related action resource needs to be involved if the first execution effect is out of control.

For example, after the above step S607, upon receiving a turn-off instruction input by the user, the terminal device provides the turn-off instruction to the intelligent gateway. The intelligent gateway transmits the turn-off instruction to each related intelligent device and sensor. Each related intelligent device and sensor performs a turn-off operation according to the turn-off instruction.

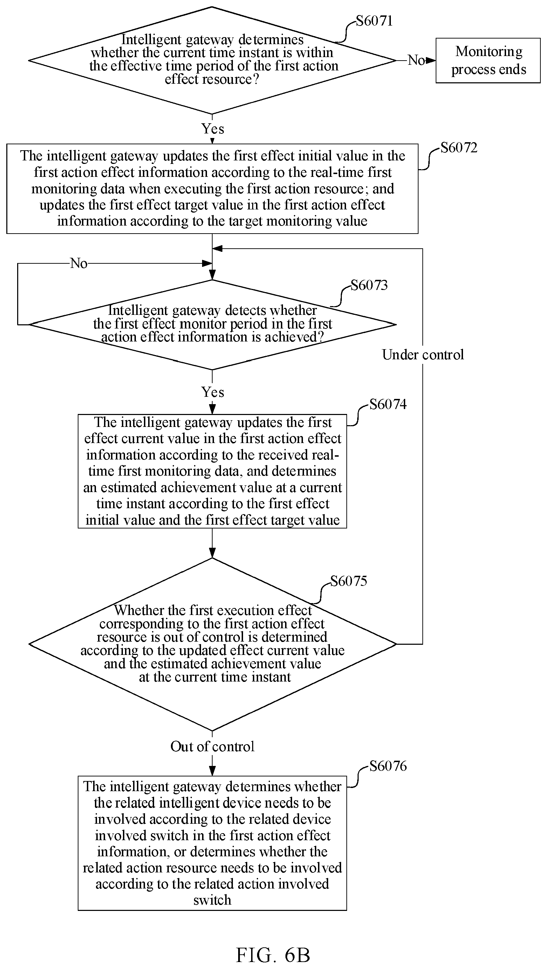

For example, a schematic flowchart of a method of monitoring the first execution effect corresponding to the first action resource according to the real-time first monitoring data in the above step S607 is shown in FIG. 6B, including the following steps. In S6071, the intelligent gateway determines whether the current time instant is within the effective time period effectTime of the first action effect resource of the first action resource. If so, step S6072 is performed. If not, the process of monitoring the first execution effect corresponding to the first action effect resource ends.

In the present disclosure, after the first intelligent device is turned on according to the execution instruction, the real-time monitoring data received by the corresponding sensor is stored as action effect data and updated into the first action effect resource. The real-time monitoring data is still stored or overlay stored in the container instance of the container resource of the sensor.

For example, if the action effect data is stored as a parameter of the first action resource, the action effect data in the first action resource is accessed directly.

For example, if the first action effect resource is stored as a sub-resource in the first action resource, the action effect data in the first action effect resource in the first action resource is accessed directly.

For example, the intelligent gateway reads the effective time period effectTime from the first action effect resource of the first action resource and determines whether the current time instant is in a range of the effective time period of the first action resource. If so, step S6072 is performed. If not, the process of monitoring the first execution effect ends.

In S6072, the intelligent gateway updates the first effect initial value effectinitialValue in the first action effect resource according to the real-time first monitoring data when executing the first action resource, and updates the first effect target value effectTargetValue in the first action effect resource according to the target monitoring value.

In S6073, the intelligent gateway monitors whether the current effect monitor period is reached according to the first effect monitor period EffectMornitorPeriod in the first action effect resource. If so, S6075 is performed. If not, this step continues to be executed.

In S6074, the intelligent gateway updates the first effect current value effectCurrentValue in the first action effect resource according to the received real-time first monitoring data, and determines the estimated achievement value at the current time instant according to the first effect initial value and the first effect target value.

For example, determining the estimated achievement value at the current time instant according to the first effect initial value and the first effect target value may include: determining an estimated achievement effect after each time interval according to the first effect initial value, the first effect target value, the first effect predicted achievement period and the first effect monitor period; and determining the estimated achievement value at the current time instant according to a time difference between the current time instant and the initial time instant, the first effect monitor period and the estimated achievement effect after each time interval, where the initial time instant is a time instant of starting an execution of the action resource.

For example, for ease of understanding and introduction with equations, the first effect initial value effectInitialValue is set to V0, the first effect current value effectCurrentValue is set to Vc, the first effect target value effectTargetValue is set to Vt, the first effect monitor period effectMornitorPeriod is set to △t, the first effect predicted achievement period effectPredictedTime is set to Tp (relative value), the initial time instant is set to t0, which is a time instant of starting monitoring the action effect, and the current time instant is set to tc.

The estimated achievement effect after each time interval: e = (Vt-V0)/(Tp/△ t).

The estimated achievement value at the current time instant: V = int ((tc-t0)/△ t)*e.

In S6075, the intelligent gateway determines whether the first execution effect corresponding to the first action effect resource is out of control according to the updated first effect current value and the estimated achievement value at the current time instant, and updates a determination result to the first effect control trend effcetControlStatus in the first action effect resource. In response to a determination result of under control, a next cycle of detection continues to be performed, and the process jumps to step S6073. In response to a determination result of out of control, S6076 is performed.

For example, determining whether the first execution effect is out of control according to the updated first effect current value Vc and the estimated achievement value at the current time instant may include: determining an upper limit of the estimated achievement value at the current time instant and a lower limit of the estimated achievement value at the current time instant according to a first effect control parameter effectControlParameter in the first action effect resource and the estimated achievement value at the current time instant; and determining whether the first execution effect is out of control according to the upper limit of the estimated achievement value at the current time instant, the lower limit of the estimated achievement value at the current time instant and the updated first effect current value Vc.

For example, the updated first effect current value is Vc, the first effect control parameter effectControlParameter is set to ec, and ec is of a percentage type. The upper limit of the estimated achievement value at the current time instant is V*(1+ec), and the lower limit of the estimated achievement value at the current time instant is V*(1-ec). It is determined whether Vc satisfies Vc <V*(1+ec) and Vc >V*(1-ec). If so, it is determined that the first execution effect is under control, and the first effect control trend effcetControlStatus is updated to under control underControl. If not, it is determined that the first execution effect is out of control, and the first effect control trend effcetControlStatus is updated to out of control outOfControl.

For example, when the determination result or the first effect control trend is under control, the intelligent gateway detects whether a difference between the current time instant and the monitoring start time instant has reached the first effect predicted achievement period effectPredictedTime of the first action effect resource. If so, the monitoring ends. If not, a next cycle of detection continues to be performed, and the process jumps to step S6073.

In S6076, the intelligent gateway determines whether the related second intelligent device needs to be involved according to the related device involved switch relatedDeviceInvolved in the first action effect resource, or determines whether the related action resource needs to be involved according to the related action involved switch relatedActionInvolved.

For example, the intelligent gateway may read the status value of the related device involved switch relatedDeviceInvolved in the first action effect resource. If the read status value is True, the related device needs to be involved. If the read status value is False, the related device does not need to be involved.

Alternatively, the intelligent gateway may read the status value of the related action involved switch relatedActionInvolved. If the read status value is True, the related action resource needs to be involved. If the read status value is False, the related action resource does not need to be involved.

For example, when the intelligent gateway determines that the related second intelligent device needs to be involved, the above S607 of turning on the second intelligent device related with the first intelligent device according to the monitoring result for the action effect may include: the intelligent gateway operating according to the related device involved setting relatedDeviceOption or the related action involved setting relatedActionOption in the first action effect resource of the action resource, reading the related device involved list relatedDeviceList or the related action involved list relatedActionList in the first action effect resource, and selecting an identification of an intelligent device as the identification of the related second intelligent device; generating and transmitting a startup instruction to the related second intelligent device according to the identification of the related second intelligent device. The related second intelligent device performs a startup operation according to the received startup instruction.

An example of an action resource-based method of controlling an intelligent device is described below with reference to the accompanying drawings.

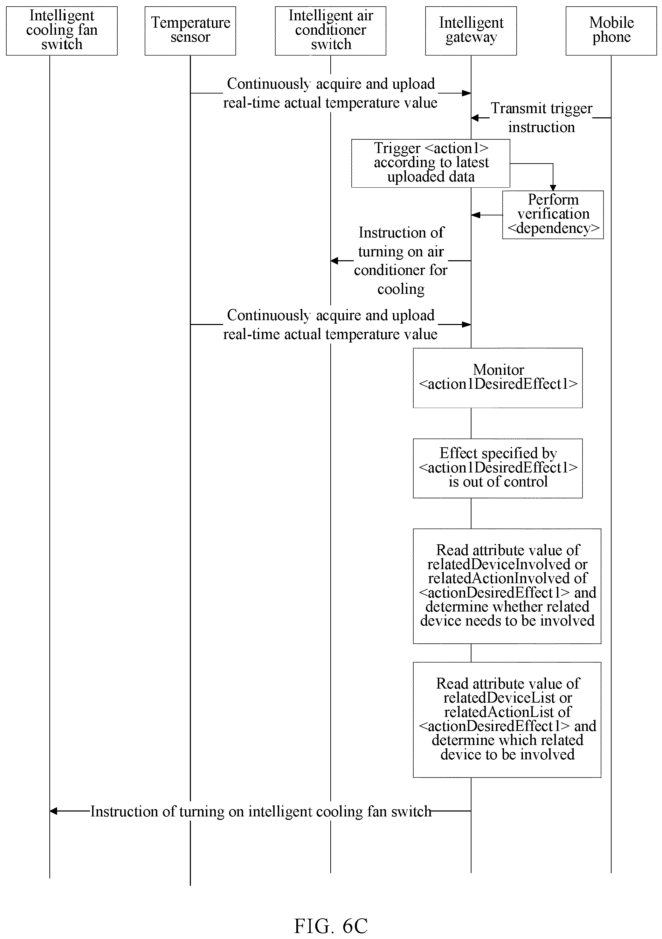

As shown in FIG. 6C, the temperature sensor continuously acquires the real-time actual temperature values and continuously provides them to the intelligent gateway. In this example, the monitoring data may be, for example, the actual temperature value.

A mobile phone transmits a trigger instruction containing a target monitoring temperature to the intelligent gateway.

Upon receiving the trigger instruction, the intelligent gateway determines that the trigger condition of the first action resource action1 is satisfied according to the latest provided actual temperature value, and the first action resource action1 is triggered.

The intelligent gateway performs a verification on the first action resource action1, and transmits a cooling start instruction to the intelligent air conditioner switch if the verification is successful.

The intelligent air conditioner switch turns on the air conditioner for cooling according to the cooling start instruction. The temperature sensor acquires and provides the real-time actual temperature value as the effect current value.

The intelligent gateway updates the first action effect resource action1DesiredEffect1 of the first action resource action1 according to the first effect current value, and monitors the first action effect resource action1DesiredEffect1 of the first action resource action1. When the action effect of the first action effect resource action1DesiredEffect1 is out of control, the status value of the related device involved switch relatedDeviceInvolved or the related action involved switch relatedActionInvolved of the first action effect resource action1DesiredEffect1 is read, and whether the related second intelligent device needs to be involved is determined according to the read status value. When it is determined that the related second intelligent device needs to be involved, an attribute value of the related device involved list relatedDeviceList or the related action involved list relatedActionList in the action effect resource is read, a related intelligent cooling fan switch is selected according to the attribute value, and a cooling trigger instruction is transmitted to the related intelligent cooling fan switch.

The intelligent cooling fan switch starts the cooling fan or the intelligent cooling fan for cooling according to the received cooling trigger instruction.

In embodiments of the present disclosure, the first action resource contains an identification of the first intelligent device, a trigger condition of the first intelligent device, an execution instruction of the first intelligent device, and a first action effect resource recording a first execution effect of the first action resource, etc. The first action effect resource contains the identification of the second intelligent device related with the first intelligent device. The monitoring of the execution effect of the first intelligent device corresponding to the first action resource is introduced. When the monitoring result for the execution effect is out of control, it indicates that the preset target monitoring value may not be achieved within a predetermined time period by the operation of the first intelligent device alone. Therefore, it is needed to control to turn on the related second intelligent device with the same function (such as cooling) to operate together with the first intelligent device, which is equivalent to achieving an action effect-based joint control of the intelligent devices. Different from an existing method in which each intelligent device is controlled individually and the action effects often conflict, the control is more accurate and more efficient.

Another action resource-based method of controlling an intelligent device will be described below, where a difference from the above-mentioned action resource-based method of controlling the intelligent device is mainly introduced, and the similarity is omitted as far as possible.

For example, after the above step S203 of determining the execution instruction in the first action resource and transmitting the execution instruction to the first intelligent device corresponding to the first action resource, the method may further include receiving second monitoring data provided by the second sensor. Monitoring the execution effect of the first action resource according to the real-time first monitoring data and turning off the first intelligent device according to the monitoring result for the execution effect includes: monitoring a second execution effect corresponding to the first action resource according to the real-time second monitoring data, and updating a second action effect information (also referred to as a second action effect resource) of the first action resource corresponding to the second execution effect; and determining that the first intelligent device needs to be turned off and executing an operation instruction opposite to the execution instruction when the monitoring result for the second execution effect is out of control.

In some embodiments, the second sensor may provide values by a variety of methods. For example, one method is to provide the acquired values at time intervals; and another method is to provide a value when the change of the value acquired by the second sensor exceeds a preset threshold.

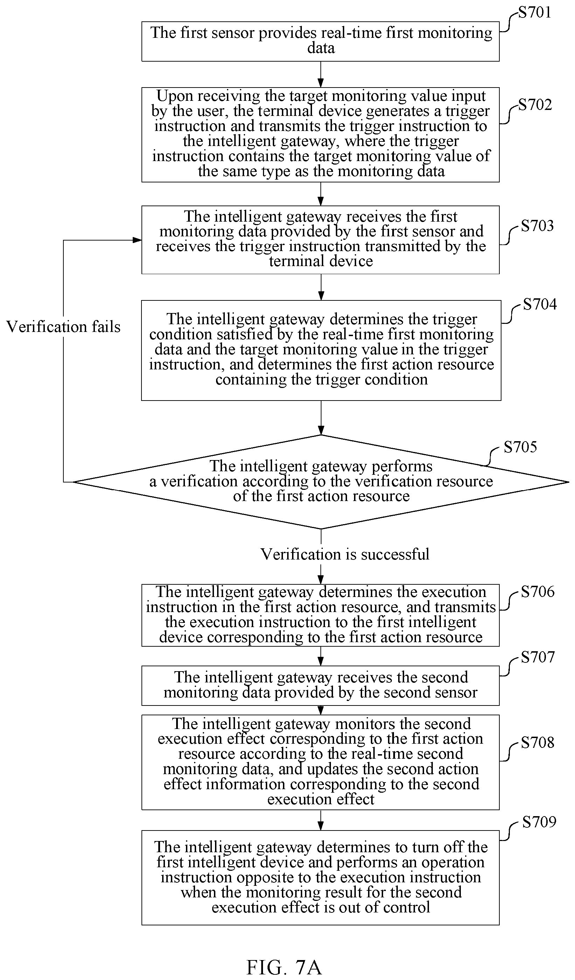

For example, a schematic flowchart of another action resource-based method of controlling an intelligent device is shown in FIG. 7A, including steps S701 to S709. In S701, the first sensor provides real-time first monitoring data.

For example, the method of S701 is the same as the method of S601, and details are not repeated here.

Step S701 starts before S702 and lasts after S709, until a turn-off instruction issued by the intelligent gateway is received.

In S702, upon receiving the target monitoring value input by the user, the terminal device generates a trigger instruction and transmits the trigger instruction to the intelligent gateway, where the trigger instruction contains the target monitoring value of the same type as the monitoring data.

For example, the method of S702 is the same as the method of S602, and details are not repeated here.

In S703, the intelligent gateway receives the first monitoring data provided by the first sensor and receives the trigger instruction transmitted by the terminal device.

For example, the method of S703 is the same as the method of S603, and details are not repeated here.

In S704, the intelligent gateway determines the trigger condition satisfied by the real-time first monitoring data and the target monitoring value in the trigger instruction, and determines the first action resource containing the trigger condition.

For example, the method of S704 is the same as the method of S604, and details are not repeated here.

In S705, the intelligent gateway performs a verification according to the first verification resource of the first action resource. If the verification fails, the process jumps to step S703. If the verification is successful, step S706 is performed.

For example, the intelligent gateway performing a verification according to the first verification resource of the first action resource includes determining whether an opposite-effect intelligent device to the first intelligent device is being executed. If so, it is determined that the verification fails, the transmission of the execution instruction to the first intelligent device corresponding to the first action resource is terminated, and the process ends or jumps to step S703. If not, it is determined that the verification is successful, and step S706 is performed.

For example, the method of S705 is the same as the method of S605, and details are not repeated here.

In S706, the intelligent gateway determines the execution instruction in the first action resource, and transmits the execution instruction to the first intelligent device corresponding to the first action resource.

For example, the method of S706 is the same as the method of S606, and details are not repeated here.

For example, a sensor is a temperature sensor in the living room, and the first action effect resource action1DesiredEffect1 of the first action resource action1 includes parameters: effect resource identification effectResourceID, effect initial value effectInitialValue, effect current value effectCurrentValue, effect target value effectTargetValue, effect monitor period effectMornitorPeriod, effect predicted achievement period effectPredictedTime, effect control parameter effectControlParameter, effect control trend effectControlStatus, related device involved switch relatedDeviceInvolved, and effective time period effectTime.

The values corresponding to the above parameters in the first action effect resource action1DesiredEffect1 of the first action resource action1 may be respectively set to: living room temperature sensor container, latest data provided by the living room temperature sensor when the action is triggered, status value, 26 degrees Celsius, 5min (minutes), 30min, 20%, status value, True, 2019/06/01/00:00:00-2019/09/15/23:59:59.

For example, the intelligent gateway may determine the execution instruction in the first action resource and transmit the execution instruction to the first intelligent device corresponding to the first action resource, and the first intelligent device is turned on in response to receiving the execution instruction.

After the first intelligent device is turned on, the real-time actual temperature value continuously acquired and provided by the living room temperature sensor is actually stored as the effect current value in the action effect data. Therefore, the status value of the effect current value effectCurrentValue is updated according to the real-time actual temperature value continuously acquired and provided by the living room temperature sensor.

In S707, the intelligent gateway receives the second monitoring data provided by the second sensor.

For example, the second sensor may be a cooling average power sensor. The first action resource action1 further includes a second action effect resource action1DesiredEffect2 (also referred to as a second action effect information), and the second action effect resource action1DesiredEffect2 of the first action resource action1 includes parameters: effect resource identification effectResourceID, effect initial value effectInitialValue, effect current value effectCurrentValue, effect target value effectTargetValue, effect monitor period effectMornitorPeriod, effect predicted achievement period effectPredictedTime, effect control parameter effectControlParameter, effect control trend effectControlStatus, related device involved switch relatedDeviceInvolved, and effective time period effectTime.

The values corresponding to the above parameters in the second action effect resource action1DesiredEffect2 of the first action resource action1 may be respectively set to: cooling average power sensor container, latest data provided by the living room temperature sensor when the action is triggered, status value, 100W (Watts), 5min, 12h, 50%, status value, True, 2019/06/01/00:00:00-2019/09/15/23:59:59.

In S708, the intelligent gateway monitors the second execution effect corresponding to the first action resource according to the real-time second monitoring data, and updates the second action effect resource of the first action resource corresponding to the second execution effect.

For example, the method of S708 is consistent with the method of monitoring the first execution effect according to the real-time first monitoring data in step S607, except that the first monitoring data is replaced with the second monitoring data; or that the first execution effect and the second execution effect corresponding to the first monitoring data and the second monitoring data need to be monitored in S708, which will not be repeated here.

In S709, the intelligent gateway determines to turn off the first intelligent device and performs an operation instruction opposite to the execution instruction when the monitoring result for the second execution effect is out of control.

For example, when the monitoring result for the second execution effect corresponding to the second action effect resource is out of control, the intelligent gateway determines that a reverse action, which is an operation opposite to the operation corresponding to the execution instruction, needs to be executed against the first intelligent device, and transmits an operation instruction opposite to the execution instruction to the first intelligent device. The first intelligent device performs a turn-off operation according to the received operation instruction opposite to the execution instruction.

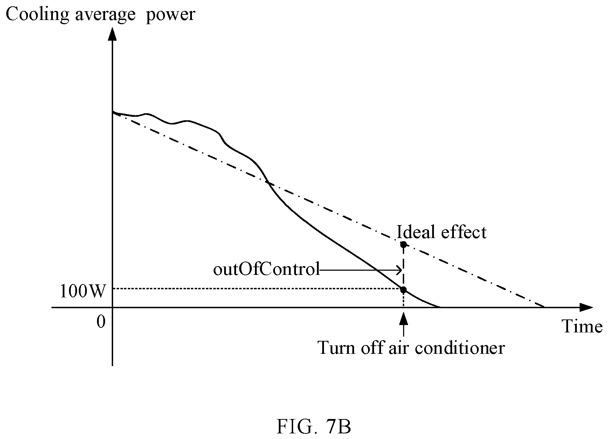

For example, when a monitoring result for the cooling average power of the second execution effect of the intelligent air conditioner switch starting the air conditioner for cooling is out of control, it means that the cooling has reached a predetermined target temperature value (belonging to the effect target value). As shown in FIG. 7B, the cooling average power of the air conditioner is already low and far below an ideal effect. A difference between the cooling average power for the ideal effect and the current actual cooling average power has exceeded a control range indicated by a dotted horizontal line, that is, out of control, which indicates that the intelligent air conditioner switch and the air conditioner have achieved a cooling task and may be temporarily turned off.

For example, if the monitoring result for the first execution effect corresponding to the first action effect resource is under control, and the monitoring result for the second execution effect corresponding to the second action effect resource is out of control, the intelligent gateway may determine that a reverse action needs to be performed against the first intelligent device, transmit an operation instruction opposite to the execution instruction to the first intelligent device. Then, the first intelligent device performs a turn-off operation according to the received operation instruction opposite to the execution instruction.

For example, after the first action resource is executed so that the intelligent air conditioner switch turns on the air conditioner for cooling, if the monitoring result for the temperature-related first execution effect is under control and the monitoring result for the cooling average power-related second execution effect is out of control, it indicates that the cooling has reached the predetermined target temperature value (belonging to the effect target value). Further, as shown in FIG. 7B, the cooling average power of the air conditioner is already low and far below the ideal effect, and the difference between the cooling average power for the ideal effect and the current actual cooling average power has exceeded the control range indicated by the dotted horizontal line, that is, out of control. It means that the intelligent air conditioner switch and the air conditioner have achieved the cooling task and may be temporarily turned off. Alternatively, it indicates that the cooling task has been achieved in a case that the related second intelligent device is turned on, and the intelligent air conditioner switch and the air conditioner may be temporarily turned off.

An example of an action resource-based method of controlling an intelligent device is described below with reference to the accompanying drawings.

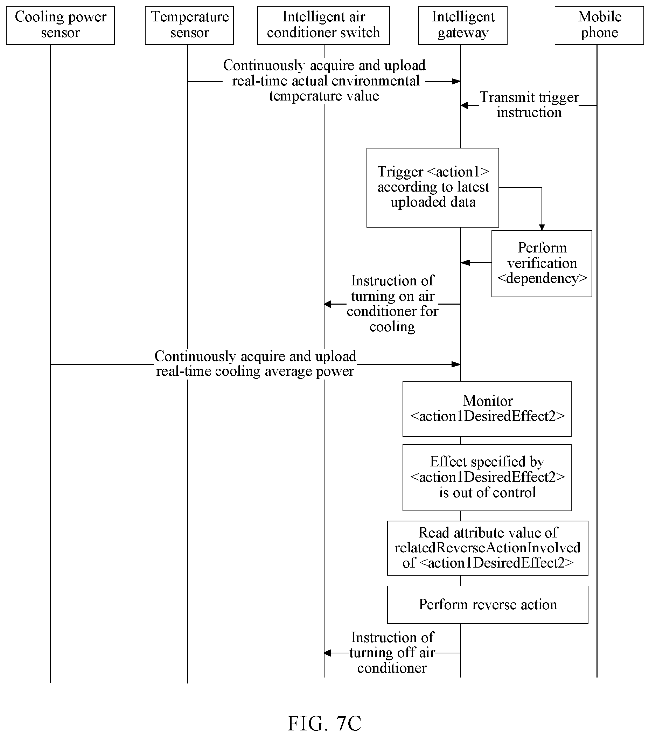

As shown in FIG. 7C, the temperature sensor continuously acquires real-time actual temperature values and continuously provides them to the intelligent gateway. The monitoring data is the actual temperature value in this example.

A mobile phone transmits a trigger instruction containing a target temperature to the intelligent gateway.

Upon receiving the trigger instruction, the intelligent gateway determines that the trigger condition of the first action resource action1 is satisfied according to the latest provided actual temperature value, and the first action resource action1 is triggered.

The intelligent gateway performs a verification on the first action resource, and transmits a cooling start instruction to the intelligent air conditioner switch if the verification is successful.

The intelligent air conditioner switch turns on the air conditioner for cooling according to the cooling start instruction. The temperature sensor continues to acquire and provide real-time actual temperature values.

The cooling power sensor starts to operate, continuously acquires and provides the real-time cooling average power values.

Upon receiving the cooling average power values, the intelligent gateway determines to trigger the monitoring of the second execution effect corresponding to the second action effect resource of the first action resource. The intelligent gateway determines a received real-time cooling average power value as the effect current value, updates the second action effect resource action1DesiredEffect2 of the first action resource according to the effect current value, and monitors the second execution effect corresponding to the second action effect resource. When the second execution effect corresponding to the second action effect resource is out of control, an attribute value of the related reverse action switch relatedReverseActionInvolved of the second action effect resource is read, a reverse action (referring to turn-off) for the intelligent air conditioner switch is executed according to the attribute value, and a cooling off instruction is transmitted to the intelligent air conditioner switch.

The intelligent air conditioner switch turns off the cooling function of the air conditioner according to the received cooling off instruction, such as directly turning off the entire air conditioner.

In embodiments of the present disclosure, the first action resource contains the identification of the first intelligent device, the trigger condition of the first intelligent device, the execution instruction of the first intelligent device, and the first action effect resource recording the first execution effect of the first action resource, etc., and the first action effect resource contains the identification of the related second intelligent device. The monitoring of the execution effects corresponding to the two action effect resources of the first intelligent device corresponding to the first action resource is introduced. When the monitoring result for the second execution effect corresponding to the second action effect resource is out of control, it indicates that the first intelligent device has reached the preset target monitoring value, and the first intelligent device may be controlled to be temporarily turned off, so that the control is more accurate and efficient, which is conducive to energy saving.

Another action resource-based method of controlling an intelligent device is introduced below, where a difference from the above-described action resource-based method of controlling the intelligent device is mainly introduced, and the similarity is omitted as far as possible.

For example, resolving a conflict between the later-triggered second action resource and the first action resource according to the first monitoring data in the above step S204 may include: determining the effective time period in the second action resource and the effective time period in the first action resource when the real-time first monitoring data provided by the first sensor triggers the second action resource; continuing to execute the first action resource and ignoring the second action resource when the effective time period in the first action resource contains the current time instant; or executing the second action resource and terminating the execution of the first action resource when the effective time period in the second action resource contains the current time instant.

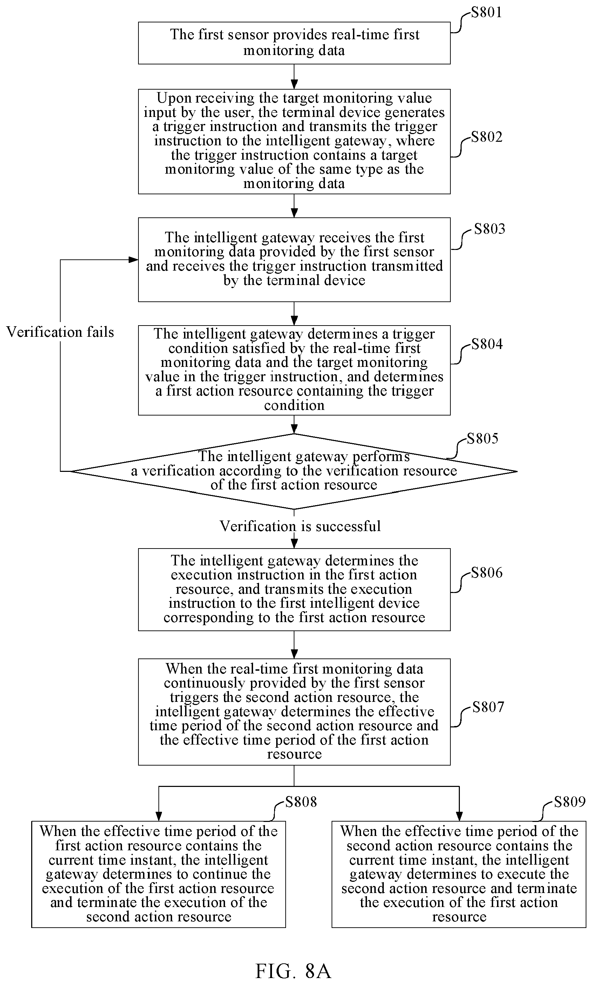

For example, a schematic flowchart of an action resource-based method of controlling an intelligent device is shown in FIG. 8A, including steps S801to S809 as follows.

In S801, the first sensor provides real-time first monitoring data.

For example, the method of S801 is the same as the method of S601, and details are not repeated here.

Step S801 starts before S802 and lasts after S809, until a turn-off instruction issued by the intelligent gateway is received.

In S802, upon receiving a target monitoring value input by the user, the terminal device generates a trigger instruction and transmits the trigger instruction to the intelligent gateway, where the trigger instruction contains the target monitoring value of the same type as the monitoring data.

For example, the method of S802 is the same as the method of S602, and details are not repeated here.

In S803, the intelligent gateway receives the first monitoring data provided by the first sensor and receives the trigger instruction transmitted by the terminal device.

For example, the method of S803 is the same as the method of S603, and details are not repeated here.

In S804, the intelligent gateway determines a trigger condition satisfied by the real-time first monitoring data and the target monitoring value in the trigger instruction, and determines a first action resource containing the trigger condition.

For example, the method of S804 is the same as the method of S604, and details are not repeated here.

In S805, the intelligent gateway performs a verification according to the first verification resource of the first action resource. If the verification fails, the process jumps to step S803. If the verification is successful, step S806 is performed.

For example, the intelligent gateway performing a verification according to the first verification resource of the first action resource may include determining whether the opposite-effect intelligent device to the first intelligent device is being executed. If so, it is determined that the verification fails and the transmission of the execution instruction to the first intelligent device of the first action resource is terminated, and then the process ends or jumps to step S803. If not, it is determined that the verification is successful, and then step S806 is performed.

For example, the method of S805 is the same as the method of S605, and details are not repeated here.

In S806, the intelligent gateway determines the execution instruction in the first action resource, and transmits the execution instruction to the first intelligent device corresponding to the first action resource.

For example, the method of S806 is the same as the method of S606, and details are not repeated here.

For example, the first sensor is a temperature sensor in a living room, and parameters of the first action resource include: a trigger condition subject, an execution instruction input, and an execution object object. The trigger condition subject, the execution instruction input and the execution object object are respectively set to: temperature greater than 30 degrees, start cooling, and intelligent air conditioner switch. The first action effect resource action1DesiredEffect1 of the first action resource action1 includes an effective time period effectTime. The value corresponding to the effective time period effectTime is set to 2019/06/01/00:00:00-2019/09/15/23:59:59.

For example, the intelligent gateway may determine the execution instruction of the first action resource and transmit the execution instruction to the first intelligent device corresponding to the first action resource. The first intelligent device is turned on in response to receiving the execution instruction.

In S807, when the real-time first monitoring data provided by the first sensor triggers the second action resource, the intelligent gateway determines the effective time period of the second action resource and the effective time period of the first action resource. S808 or S809 is then performed.

For example, after the first intelligent device is turned on in the above step, this step S807 starts, and the living room temperature sensor continues to acquire and provide the real-time actual temperature values. The second action resource action2 is triggered, and the effective time period in the first action effect resource action2DesiredEffect1 of the second action resource action2 and the effective time period in the first action effect resource action1DesiredEffect1 of the first action resource action1 are determined.

For example, the second action resource action2 includes the first action effect resource action2DesiredEffect1, and no verification resource is configured. Parameters of the second action resource action2 includes a trigger condition subject, an execution instruction input and an execution object object. The trigger condition subject, the execution instruction input and the execution object object are set to: temperature less than 18 degrees, start heating, and intelligent air conditioner switch. The first action effect resource action2DesiredEffect1 of the second action resource action2 includes an effective time period effectTime. The value corresponding to the effective time period effectTime is set to 2019/12/01/00:00:00-2020/01/15/23:59:59.

In S808, when the effective time period of the first action resource contains the current time instant, the intelligent gateway determines to continue executing the first action resource and ignores the second action resource.

For example, the intelligent gateway may acquire the current time instant. When it is determined that the current time instant falls within the effective time period in the first action effect resource of the first action resource and does not fall within the effective time period in the first action effect resource of the second action resource, the intelligent gateway determines to continue executing the first action resource and ignores the second action resource.

In S809, when the effective time period of the second action resource contains the current time instant, the intelligent gateway determines to execute the second action resource and terminates the execution of the first action resource.

For example, the intelligent gateway may acquire the current time instant. When it is determined that the current time instant falls within the effective time period of the first action effect resource of the second action resource and does not fall within the effective time period of the first action effect resource of the first action resource, the intelligent gateway determines to execute the second action resource and terminates the execution of the first action resource.

An example of an action resource-based method of controlling an intelligent device is introduced below with reference to the accompanying drawings.

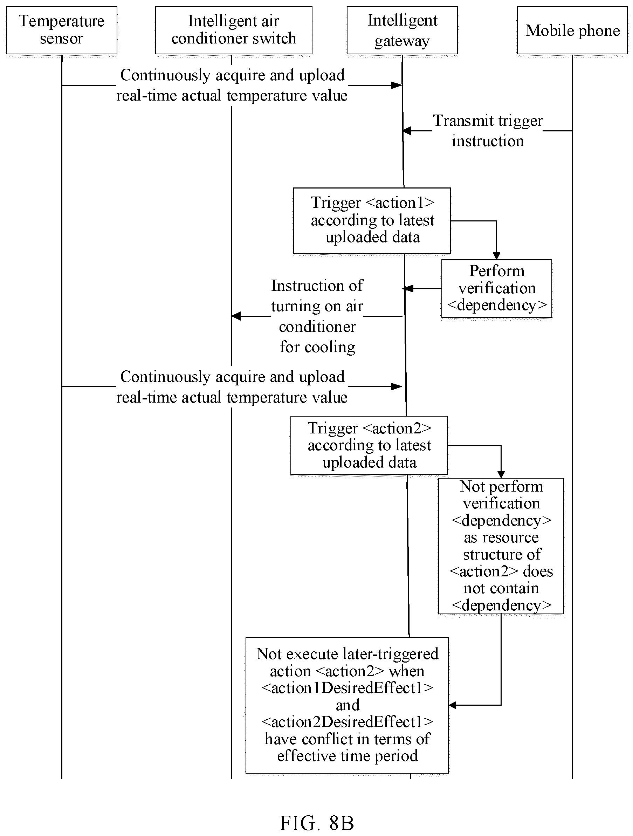

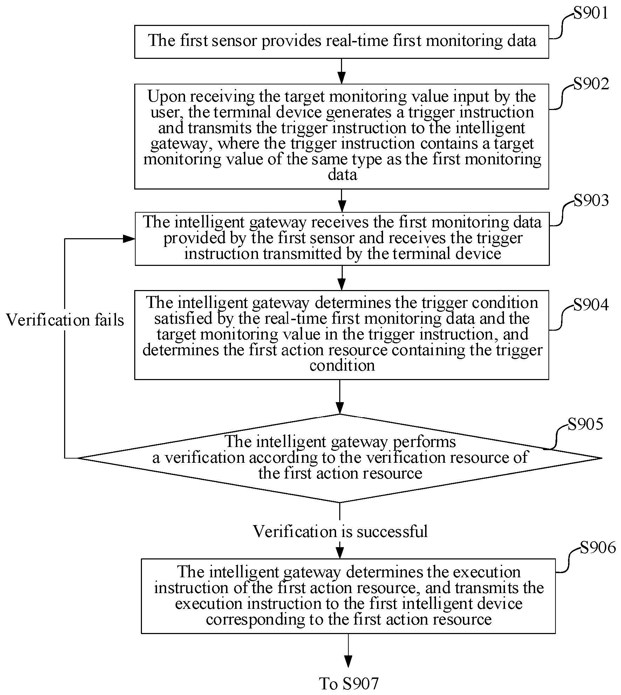

As shown in FIG. 8B, the temperature sensor continuously acquires the real-time monitoring temperature values and continuously provides them to the intelligent gateway.

A mobile phone may transmit a trigger instruction containing a target monitoring temperature to the intelligent gateway.

Upon receiving the trigger instruction, the intelligent gateway determines that the trigger condition of the first action resource action1 is satisfied according to the latest provided real-time actual temperature value, and the first action resource action1 is triggered.

The intelligent gateway performs a verification on the first action resource action1, and transmits a cooling start instruction to the intelligent air conditioner switch if the verification is successful.

The intelligent air conditioner switch turns on the air conditioner for cooling according to the cooling start instruction.

The temperature sensor subsequently acquires and provides a real-time actual temperature value as the effect current value.

Upon receiving the subsequently provided real-time actual temperature value, the intelligent gateway determines to trigger the second action resource.

The intelligent gateway determines no verification resource in a resource structure of the second action resource action2, and therefore does not perform verification.

The intelligent gateway reads the effective time period effectTime in the first action effect resource action2DesiredEffect1 of the second action resource action2 and the effective time period effectTime in the first action effect resource action1DesiredEffect1 of the first action resource action1.

Upon determining that there is a conflict between the effective time period effectTime in action2DesiredEffect1 and the effective time period effectTime in action1DesiredEffect1 and that the current time instant falls within the effective time period effectTime in action1DesiredEffect1, the intelligent gateway determines to continue executing action1 and does not execute the later-triggered second action resource action2.

In embodiments of the present disclosure, the first action resource contains the identification of the first intelligent device, the trigger condition of the first intelligent device, the execution instruction of the first intelligent device, and the first action effect resource recording the first execution effect of the first action resource, etc., and the first action effect resource contains the identification of the related second intelligent device. The monitoring of two action resources of the first intelligent device corresponding to the first action resource is introduced. When the second action resource is triggered, it is checked whether a conflict exists between the effective time periods in the action effect resources of the two action resources. If a conflict exists, one of the action resources corresponding to the effective time period matched with the current time instant is selected for execution. Therefore, the conflict between the action resources may be resolved according to the effective time period in the action effect resource, so that the control is more accurate and efficient, which is conducive to energy saving.

Yet another action resource-based method of controlling an intelligent device is introduced below, where a difference from the above-mentioned action resource-based method of controlling the intelligent device is mainly introduced, and the similarity is omitted as far as possible.

For example, resolving the conflict between the later-triggered second action resource and the first action resource according to the real-time monitoring data in the above step S204 may include: when the real-time first monitoring data provided by the first sensor triggers the second action resource, determining a first effect trend corresponding to the first action resource according to the trigger condition and the first action effect information in the first action resource; determining a second effect trend corresponding to the second action resource according to the trigger condition and the third action effect information in the second action resource; when the first effect trend corresponding to the first action resource is opposite to the second effect trend corresponding to the second action resource, determining whether a status value of no-same-effect parameter in an exclusion criteria attribute in the second action resource is True and whether a status value of no-opposite-effect parameter in the exclusion criteria attribute in the second action resource is False; when the status value of the no-same-effect parameter is True and the status value of the no-opposite-effect parameter is False, determining whether the execution object in the first action resource is the same as the execution object in the second action resource; if so, continuing to execute the first action resource and ignoring the second action resource; and if not, continuing to execute the first action resource and starting executing the second action resource.

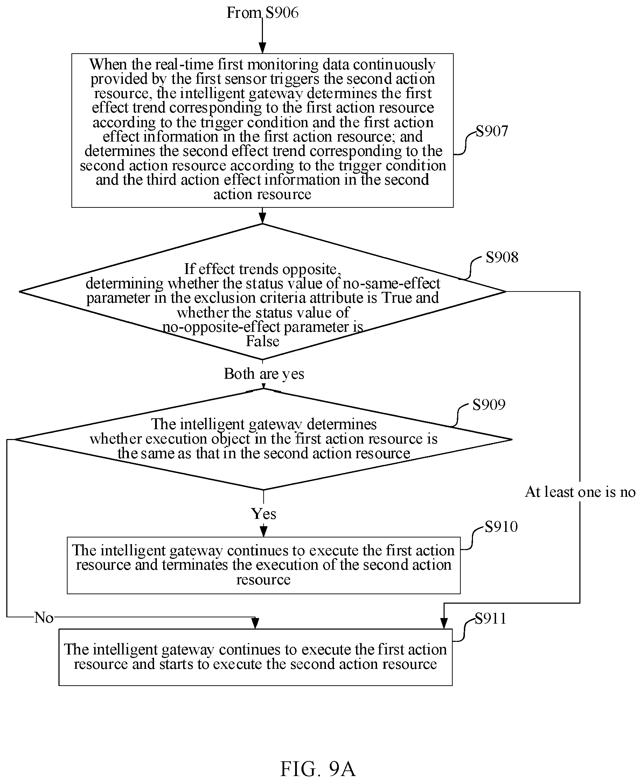

For example, a schematic flowchart of an action resource-based method of controlling an intelligent device is shown in FIG. 9A, including steps S901-S911 as follows.

In S901, the first sensor provides real-time first monitoring data.

For example, the method of S901 is the same as the method of S601, and details are not repeated here.

Step S901 starts before S902 and lasts after S908, until a turn-off instruction issued by the intelligent gateway is received.

In S902, upon receiving the target monitoring value input by the user, the terminal device generates a trigger instruction and transmits the trigger instruction to the intelligent gateway, where the trigger instruction contains a target monitoring value of the same type as the first monitoring data.

For example, the method of S902 is the same as the method of S602, and details are not repeated here.

In S903, the intelligent gateway receives the first monitoring data provided by the first sensor and receives the trigger instruction transmitted by the terminal device.

For example, the method of S903 is the same as the method of S603, and details are not repeated here.

In S904, the intelligent gateway determines the trigger condition satisfied by the real-time first monitoring data and the target monitoring value in the trigger instruction, and determines the first action resource containing the trigger condition.

For example, the method of S904 is the same as the method of S604, and details are not repeated here.

In S905, the intelligent gateway performs a verification according to the verification resource of the first action resource. If the verification fails, the process jumps to step S903. If the verification is successful, step S906 is performed.

For example, the intelligent gateway performing the verification according to the verification resource of the action resource may include: determining whether the opposite-effect intelligent device to the first intelligent device is being executed. If so, it is determined that the verification fails and the transmission of the execution instruction to the first intelligent device corresponding to the first action resource is terminated, and then the process ends or jumps to step S903. If not, it is determined that the verification is successful, and then step S906 is performed.

For example, the method of S905 is the same as the method of S605, and details are not repeated here.

In S906, the intelligent gateway determines the execution instruction of the first action resource, and transmits the execution instruction to the first intelligent device corresponding to the first action resource.

For example, the method of S906 is the same as the method of S606, and details are not repeated here.

For example, the sensor may be a temperature sensor in a living room, and parameters of the first action resource include: a trigger condition subject, an execution instruction input and an execution object object. The trigger condition subject, the execution instruction input and the execution object object are respectively set to: temperature greater than 30 degrees, start cooling, and intelligent air conditioner switch. The first action effect resource action1DesiredEffect1 of the first action resource action1 includes an effect target value effectTargetValue. A value corresponding to the effect target value effectTargetValue is set to 26 degrees Celsius.

For example, the intelligent gateway may determine the execution instruction of the first action resource, and transmit the execution instruction to the first intelligent device corresponding to the first action resource. The first intelligent device performs a turn-on operation in response to receiving the execution instruction.

In S907, when the real-time first monitoring data continuously provided by the first sensor triggers the second action resource, the intelligent gateway determines the first effect trend corresponding to the first action resource according to the trigger condition and the first action effect information in the first action resource; and determines the second effect trend corresponding to the second action resource according to the trigger condition and the third action effect information in the second action resource.

For example, after the first intelligent device is turned on in the above step, this step S907 starts, and the living room temperature sensor continues to acquire and provide the real-time actual temperature value. The second action resource is triggered, and the effect target value in the first action effect resource action2DesiredEffect1 of the second action resource action2 and the effect target value in the first action effect resource action1DesiredEffect1 of the first action resource action1 are determined.

The second effect trend of the second action resource action2 is determined according to the trigger condition of the second action resource action2 and the second effect target value in the first action effect resource action2DesiredEffect1 of the second action resource action2.

The first effect trend of the first action resource action1 is determined according to the trigger condition in the first action resource action1 and the first effect target value in the first action effect resource action1DesiredEffect1 of the first action resource action 1.

For example, the second action resource action2 includes the first action effect resource action2DesiredEffect1, but no verification resource is configured. Parameters of the second action resource action2 include: a trigger condition subject, an execution instruction input and an execution object object. The trigger condition subject, the execution instruction input and the execution object object are respectively set to: temperature less than 18 degrees, start heating, and intelligent air conditioner switch. The first action effect resource action2DesiredEffect1 of the second action resource action2 includes an effect target value effectTargetValue. A value corresponding to the effect target value effectTargetValue is set to 27 degrees Celsius. The intelligent gateway determines that the trigger condition of the second action resource action2 is temperature less than 18 degrees, the second effect target value is 27 degrees, and the second effect trend is heating up; and that the trigger condition subject of the first action resource action1 is temperature greater than 30 degrees, the first effect target value is 26 degrees, and the first effect trend is cooling down.

For example, the action resource further includes an exclusion criteria attribute exclusion Criteria, which includes at least one of parameters of no-same-effect noSameEffect, no-opposite-effect noOppositeEffect, and no-same-object noSameObject.

For example, a status value of the no-same-effect noSameEffect parameter, a status value of the no-opposite-effect noOppositeEffect parameter and a status value of the no-same-object noSameObject parameter in each exclusion criteria attribute may be set and updated according to experimental data, empirical data, historical operating data and/or user input data.

For example, various parameters in each exclusion criteria attribute may be updated during a historical usage of each action resource. For example, during the historical usage, when the intelligent gateway determines that the effect trend of one executed action resource (e.g., the first action resource) is cooling down and the effect trend of another action resource (e.g., the second action resource) is heating up, the status value of the no-same-effect noSameEffect parameter in the exclusion criteria attribute of the another action resource which is later-triggered is updated to True, and the status value of the no-opposite-effect noOppositeEffect parameter is updated to False. The intelligent gateway updates the status value of the no-same-object noSameObject parameter according to the execution object object in the trigger condition of the executed action resource and the execution object object in the trigger condition of the another action resource which is later-triggered.

For example, when the first action resource action1 is executed first, the second action resource action2 is triggered later, and if the intelligent gateway determines that the first effect trend of the first action resource action1 is cooling down and the second effect trend of the second action resource action2 is heating up, the status value of the no-same-effect noSameEffect parameter in the exclusion criteria attribute of the later-triggered second action resource is updated to True, and the status value of the no-opposite-effect noOppositeEffect parameter is updated to False. The intelligent gateway reads the status value of the execution object object in the trigger condition of the first action resource action1 as the intelligent air conditioner switch, and reads the status value of the execution object object in the trigger condition of the later-triggered second action resource as the intelligent air conditioner switch, and updates the status value of the no-same-object noSameObject parameter to False.

In S908, when the first effect trend corresponding to the first action resource is opposite to the second effect trend corresponding to the second action resource, the intelligent gateway determines whether the status value of the no-same-effect noSameEffect parameter in the exclusion criteria attribute in the second action resource is True and whether the status value of the no-opposite-effect noOppositeEffect parameter is False. If the status value of the no-same-effect noSameEffect parameter is True and the status value of the no-opposite-effect noOppositeEffect parameter is False, step S909 is performed. If the status value of the no-same-effect noSameEffect parameter is not True and/or the status value of the no-opposite-effect noOppositeEffect parameter is not False, step S911 is performed.

For example, the intelligent gateway may read, in the exclusion criteria attribute of the later-triggered second action resource, the status value of the no-same-effect noSameEffect parameter and the status value of the no-opposite-effect noOppositeEffect parameter. When the status value of the no-same-effect noSameEffect parameter is True and the status value of the no-opposite-effect noOppositeEffect parameter is False, it is indicated from another dimension that the first effect trend of the first action resource is opposite to the second effect trend of the second action resource, and then step S909 is performed.

When the status value of the no-same-effect noSameEffect parameter is False or the status value of the no-opposite-effect noOppositeEffect parameter is True, it is indicated from another dimension that the first effect trend of the first action resource is not opposite to the second effect trend of the second action resource, and then step S911 is performed.

In S909, the intelligent gateway determines whether the execution object in the first action resource is the same as the execution object in the second action resource. If so, S910 is performed. If not, S911 is performed.

For example, when the status value of the no-same-effect noSameEffect parameter of the later-triggered second action resource is True and the status value of the no-opposite-effect noOppositeEffect parameter is False, the intelligent gateway may read the status value of the no-same-object noSameObject parameter in the exclusion criteria attribute of the later-triggered second action resource, and determine whether the read status value of the no-same-object noSameObject parameter is False. If it is False, it indicates that the executed first action resource and the later-triggered second action resource have the same object, and the objects conflict, and then S910 is performed. If it is True, it indicates that the execution object of the executed first action resource is different from the execution object of the later-triggered second action resource, and no conflict exists between the objects, and then S911 is performed.

For example, the intelligent gateway may read the status value of the no-same-object noSameObject parameter in the exclusion criteria attribute of the later-triggered second action resource action2. As the read status value of the no-same-object noSameObject parameter is False, it indicates that the executed first action resource action1 and the later-triggered second action resource action2 have the same object, and the objects conflict, and then S909 is performed.

In S910, the intelligent gateway continues to execute the first action resource and ignores the second action resource.

For example, when the second effect trend of the later-triggered second action resource is opposite to the first effect trend of the executed first action resource, the intelligent gateway determines to continue executing the first action resource action1 and ignores the second action resource action2.

In S911, the intelligent gateway continues to execute the first action resource and starts to execute the second action resource.

An example of an action resource-based method of controlling an intelligent device is introduced below with reference to the accompanying drawings.

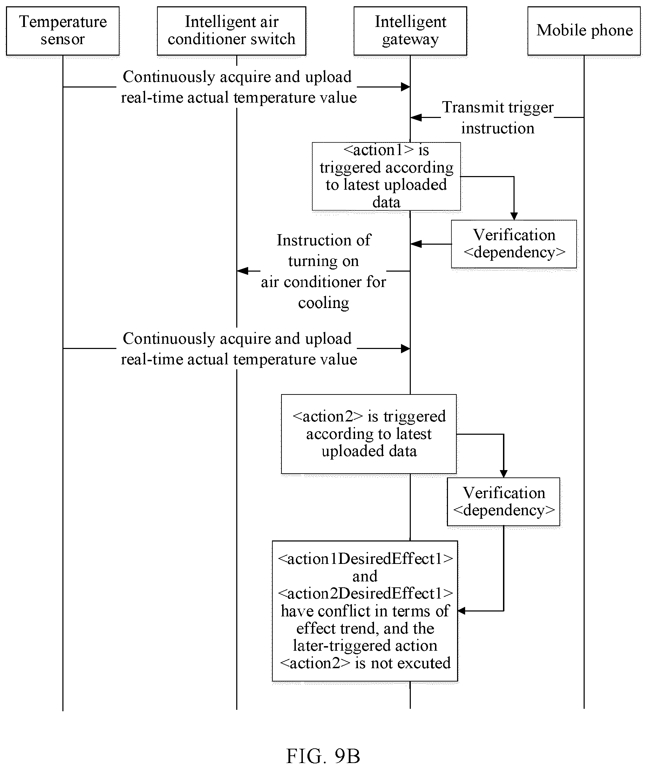

As shown in FIG. 9B, the temperature sensor continuously acquires real-time actual temperature values and continuously provides them to the intelligent gateway.

A mobile phone transmits a trigger instruction containing a target monitoring temperature to the intelligent gateway.

Upon receiving the trigger instruction, the intelligent gateway determines that the trigger condition of the first action resource action1 is satisfied according to the latest provided actual temperature value, and the first action resource action1 is triggered.

The intelligent gateway performs a verification on the first action resource, and transmits a cooling start instruction to the intelligent air conditioner switch if the verification is successful.

The intelligent air conditioner switch turns on the air conditioner for cooling according to the cooling start instruction.

The temperature sensor subsequently acquires and provides a real-time actual temperature value as an effect current value.

Upon receiving the subsequently provided real-time actual temperature value, the intelligent gateway determines to trigger the second action resource action2.

The intelligent gateway determines no verification resource in the resource structure of the second action resource action2, and therefore does not perform verification.

The intelligent gateway reads the second effect target value in the first action effect resource action2DesiredEffect1 of the second action resource action2 and the trigger condition in the second action resource action2, and then determines the second effect trend of the first action effect resource action2DesiredEffect1 of the second action resource action2 according to the second effect target value in the first action effect resource action2DesiredEffect1 of the second action resource action2 and the trigger condition in the second action resource.

The intelligent gateway reads the first effect target value in the first action effect resource action1DesiredEffect1 of the first action resource action1 and the trigger condition in the first action resource, and determines the first effect trend of the first action effect resource action1DesiredEffect1 of the first action resource action1 according to the first effect target value in the first action effect resource action1DesiredEffect1 of the first action resource action 1 and the trigger condition in the first action resource.

If a conflict exists between the second effect trend in the first action effect resource action2DesiredEffect1 of the second action resource action2 and the first effect trend in the first action effect resource action1DesiredEffect1 of the first action resource action1, the first action resource action1 continues to be executed, and the later-triggered second action resource action2 is not executed.

In embodiments of the present disclosure, the first action resource contains the identification of the first intelligent device, the trigger condition of the first intelligent device, the execution instruction of the first intelligent device, and the first action effect resource recording the first execution effect of the first action resource, etc., and the first action effect resource contains the identification of the related second intelligent device. The monitoring of two action resources of the first intelligent device corresponding to the first action resource is introduced. When the second action resource is triggered, it is checked whether a conflict exists between the trend effects of the action effect resources of the two action resources. If a conflict exists, the current first action resource continues to be executed and the later-triggered second action resource is ignored. Therefore, the conflict between the action resources may be resolved according to the effect trends of the action effect resources, and the control is more accurate and efficient, which is conducive to energy saving.

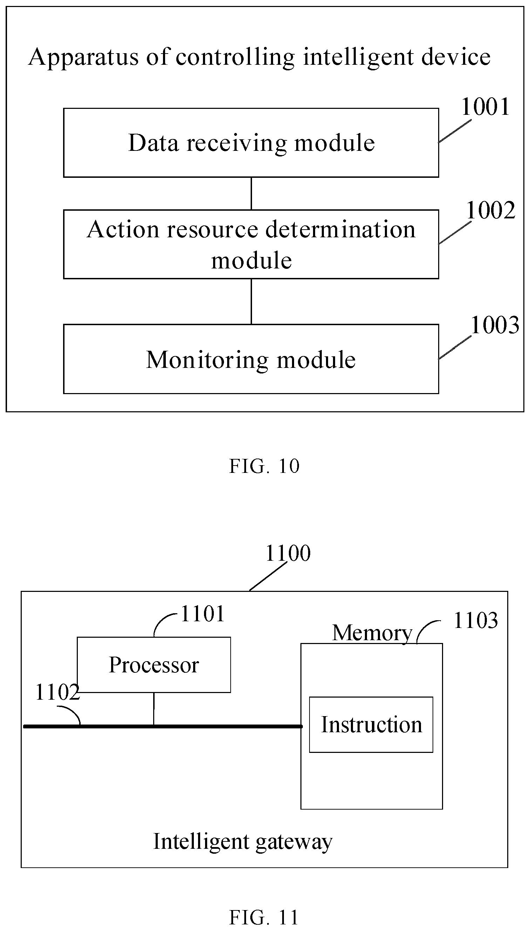

Based on the same concept, embodiments of the present disclosure provides an apparatus of controlling an intelligent device. A schematic structural framework of the apparatus is shown in FIG. 10, including a data receiving module 1001, an action resource determination module 1002 and a monitoring module 1003.

The data receiving module 1001 is used to: receive the first monitoring data provided by the first sensor and receive the trigger instruction transmitted by the terminal device, where the trigger instruction contains the target monitoring value of the same type as the monitoring data. The action resource determination module 1002 is used to: determine the trigger condition satisfied by the real-time first monitoring data and the target monitoring value, and determine the first action resource containing the trigger condition; and determine the execution instruction in the first action resource, and transmit the execution instruction to the first intelligent device corresponding to the first action resource. The monitoring module 1003 is used to: monitor the first execution effect corresponding to the first action resource according to the real-time monitoring data, and turn on the second intelligent device related with the first intelligent device or turn off the first intelligent device according to the monitoring result for the first execution effect; and/or resolve the conflict between the later-triggered second action resource and the first action resource according to the real-time monitoring data.

For example, the monitoring module 1003 is used to: update the first effect initial value in the first action effect resource corresponding to the first execution effect according to the real-time first monitoring data when the first action resource is executed; update the first effect target value in the first action effect resource according to the target monitoring value; update the first effect current value in the first action effect resource according to the real-time first monitoring data received in the first effect monitor period in the first action effect resource; determine the estimated achievement value at the current time instant according to the first effect initial value and the first effect target value; determine whether the first execution effect is out of control according to the updated first effect current value and the estimated achievement value at the current time instant, and update the determination result to the status value of the first effect control trend in the first action effect resource; and continue to perform a next cycle of detection if the execution effect is under control; or determine whether the related second intelligent device or the related action resource needs to be involved if the first execution effect is out of control.

For example, the monitoring module 1003 is used to: determine the estimated achievement effect after each time interval according to the first effect initial value, the first effect target value, the first effect predicted achievement period and the first effect monitor period; determine the estimated achievement value at the current time instant according to a time difference between a current time instant and an initial time instant, the first effect monitor period and the estimated achievement effect after each time interval, where the initial time instant is a time instant of transmitting the execution instruction in the first action resource.

For example, the monitoring module 1003 is used to: determine the upper limit of the estimated achievement value at the current time instant and the lower limit of the estimated achievement value at the current time instant according to the first effect control parameter in the first action effect resource and the estimated achievement value at the current time instant; and determine whether the first execution effect is out of control according to the upper limit of the estimated achievement value at the current time instant, the lower limit of the estimated achievement value at the current time instant, and the updated first effect current value.

For example, the data receiving module 1001 is further used to determine the execution instruction in the first action resource, transmit the execution instruction to the first intelligent device corresponding to the first action resource, and then receive the second monitoring data provided by the second sensor.

For example, the monitoring module 1003 is further used to: monitor the second execution effect corresponding to the first action resource according to another real-time monitoring data, and update the second action effect resource corresponding to the second execution effect; and determine that the first intelligent device needs to be turned off and an operation instruction opposite to the execution instruction needs to be executed when the monitoring result for the second execution effect is out of control.

For example, the monitoring module 1003 is used to: determine the effective time period in the second action resource and the effective time period in the first action resource when the real-time monitoring data subsequently provided by the sensor triggers the second action resource; continue to execute the first action resource and ignore the second action resource when the effective time period in the first action resource contains the current time instant; or execute the second action resource and terminate the execution of the first action resource when the effective time period in the second action resource contains the current time instant.

For example, the monitoring module 1003 is used to: determine the first effect trend corresponding to the first action resource according to the trigger condition and the first action effect information in the first action resource when the real-time second monitoring data subsequently provided by the first sensor triggers the second action resource; determine the second effect trend corresponding to the second action resource according to the trigger condition and the third action effect information in the second action resource; determine whether the status value of the noSameEffect parameter in the exclusion criteria attribute in the second action resource is True and whether the status value of the noOppositeEffect parameter is False when the first effect trend corresponding to the first action resource is opposite to the second effect trend corresponding to the second action resource; determine whether the execution object in the first action resource is the same as the execution object in the second action resource when the status value of the noSameEffect parameter is True and the status value of the noOppositeEffect parameter is False; if so, continue to execute the first action resource and ignore the second action resource; if not, continue to execute the first action resource and start executing the second action resource.

For example, the action resource determination module 1002 is further used to, before determining the execution instruction of the action resource and transmitting the execution instruction to the first intelligent device corresponding to the action resource, perform verification according to the verification resource of the first action resource, including: determining whether the opposite-effect intelligent device to the first intelligent device is being executed, and if so, determining the verification fails and terminating the transmission of the execution instruction to the first intelligent device corresponding to the first action resource; if not, determining that the verification is successful.

The apparatus of controlling the intelligent device in embodiments may perform any of the methods of controlling the intelligent device provided in embodiments of the present disclosure, and the implementation principles thereof are similar, which will not be repeated here.

Based on the same concept, embodiments of the present disclosure provides an intelligent gateway, including a processor, a memory communicatively connected to the processor, at least one instruction stored in the memory and configured to be executed by the processor for implementing any of the methods of controlling the intelligent device as described above in the present disclosure.

For example, the intelligent gateway provided by embodiments of the present disclosure is shown in FIG. 11. An electronic device 1100 shown in FIG. 11 includes a processor 1101 and a memory 1103. The processor 1101 and the memory 1103 are electrically connected, for example, through a bus 1102. A structure of the electronic device 1100 does not constitute a limitation to embodiments of the present disclosure.

The processor 1101 is applied in embodiments of the present disclosure to achieve the functions of various modules shown in FIG. 11.

The processor 1101 may be a CPU (Central Processing Unit), a general-purpose processor, a DSP (Digital Signal Processor), an ASIC (Application Specific Integrated Circuit), or an FPGA (Field-Programmable Gate Array) or other programmable logic devices, transistor logic devices, hardware components, or any combination thereof. It may implement or execute the various exemplary logical blocks, modules and circuits described in connection with the content of the present disclosure. The processor 1101 may also be a combination that implements computing functions, such as a combination of one or more microprocessors, a combination of a DSP and a microprocessor, and the like.

The bus 1102 may include a path to transfer information between the components described above. The bus 1102 may be a PCI (Peripheral Component Interconnect) bus or an EISA (Extended Industry Standard Architecture) bus or the like. The bus 1102 may be divided into an address bus, a data bus, a control bus, and the like. For convenience of representation, a thick line is used in FIG. 11, but this embodiment is not limited to having one bus or one type of bus.

The memory 1103 may be a ROM (Read-Only Memory) or other types of static storage devices that may store static information and instructions, a RAM (random access memory) or other types of dynamic storage devices that may store information and instructions, or may be an EEPROM (Electrically Erasable Programmable Read Only Memory), CD-ROM (Compact Disc Read-Only Memory) or other CD storage, disc storage (including compact disc, laser disc, compact disc, digital versatile disc, Blu-ray disc, etc.), magnetic disk storage media or other magnetic storage devices, or any other medium capable of carrying or storing desired program code in the form of instructions or data structures and capable of being stored and accessed by a computer, but not limited to this.

For example, the memory 1103 is used to store an application code for executing the solution of the present disclosure, and the execution is controlled by the processor 1101. The processor 1101 is used to execute the application code stored in the memory 1103, so as to implement any of the methods of controlling the intelligent device provided by the present disclosure.

Based on the same concept, embodiments of the present disclosure provides a computer-readable storage medium having a computer program therein, and the computer program, when executed by a processor, configured to cause the processor to implement any of the methods of controlling the intelligent device provided above by the present disclosure.

Embodiments of the present disclosure provide various optional implementations of the computer-readable storage medium applicable to any of the methods of controlling the intelligent device provided above by the present disclosure, and details are not repeated here.

Those skilled in the art may appreciate that the steps, measures and solutions in various operations, methods and processes discussed in the present disclosure may be alternated, modified, combined or deleted. Further, other steps, measures and solutions in the various operations, methods and processes discussed in the present disclosure may also be alternated, modified, rearranged, decomposed, combined or deleted. Further, steps, measures and solutions in various operations, methods and processes in a related art may also be alternated, modified, rearranged, decomposed, combined or deleted.

The terms "first" and "second" are used for descriptive purposes and should not be understood as indicating or implying relative importance or implicitly indicating the number of indicated technical features. Thus, a feature defined with "first" or "second" may explicitly or implicitly include one or more such features. In the description of the present disclosure, unless stated otherwise, "a plurality of" means two or more.

In the description of the present disclosure, it should be noted that unless otherwise expressly specified and limited, the terms "installed", "connected" and "coupled" should be understood in a broad sense, for example, it may indicate a fixed connection or a detachable connection, or an integral connection; or it may indicate a direct connection, or an indirect connection through an intermediate medium, or may be an internal communication of two elements. For those of ordinary skilled in the art, the meanings of the above terms in the present disclosure may be understood according to actual situations.

In the description of this specification, the features, structures, materials or characteristics may be combined in any suitable manner in any one or more embodiments or examples.

It should be understood that although the various steps in the flowchart of the accompanying drawings are sequentially shown in the order indicated by the arrows, these steps are not necessarily executed in sequence in the order indicated by the arrows. Unless explicitly stated herein, the execution of these steps is not strictly limited to the order and may be performed in other orders. Moreover, at least a part of the steps in the flowchart of the accompanying drawings may include a plurality of sub-steps or a plurality of stages. These sub-steps or stages are not necessarily executed at the same time but may be executed at different times, and are not necessarily executed in sequence, but may be executed in turn or alternately with other steps or at least a portion of sub-steps or stages of other steps.

## Claims

1. A method of controlling an intelligent device, comprising:
receiving (S201) first monitoring data provided by a first sensor;
determining (S202) a relationship between the first monitoring data and a preset target monitoring value;
determining, from a plurality of preset action resources, an action resource containing a trigger condition matched with the relationship as a first action resource;
extracting (S203) an execution instruction from the first action resource, and transmitting the execution instruction to a first intelligent device related with the first action resource; and
monitoring (S204) a first execution effect of the first intelligent device related with the first action resource according to the first monitoring data, and turning on a second intelligent device related with the first intelligent device or turning off the first intelligent device according to the first execution effect,
wherein the action resource contains an action resource parameter and an action effect resource, the action resource parameter comprises a trigger condition of the action resource, an execution instruction of the action resource and an execution object of the action resource, and the action effect resource comprises at least one of: an effect resource identification, an effect initial value, an effect current value, an effect target value, an effect monitor period, an effect predicted achievement period, a nonlinear effect parameter, an effect control parameter, an effect control trend, a related device involved switch or related action involved switch, a related device involved list or related action involved list, a related device involved setting or related action involved setting, a reverse action switch, or an effective time period,
wherein the first action resource comprises a first action effect information, and the first action effect information comprises a first effect monitor period, a first effect initial value, a first effect current value, a first effect target value and a first effect control trend, and
wherein the monitoring a first execution effect of the first intelligent device related with the first action resource according to the first monitoring data comprises:
updating the first effect initial value in the first action effect information according to the first monitoring data, and updating the first effect target value in the first action effect information according to the target monitoring value;
receiving the first monitoring data according to the first effect monitor period in the first action effect information, updating the first effect current value in the first action effect information according to the received first monitoring data, determining an estimated achievement value at a current time instant according to the first effect initial value and the first effect target value, determining whether the first execution effect is out of control or under control according to a relationship between the updated first effect current value and the estimated achievement value at the current time instant, and updating a determination result to a status value of the first effect control trend in the first action effect information; and
continuing to perform a next cycle of detection in response to determining that the first execution effect is under control; or
turning on the second intelligent device or selecting another action resource from the plurality of preset action resources as the first action resource according to the first execution effect, in response to determining that the first execution effect is out of control.

2. The method of claim 1, further comprising:
extracting (S807) an effective time period of a second action resource from the second action resource and extracting an effective time period of the first action resource from the first action resource, in response to the first monitoring data provided by the first sensor triggering the second action resource, wherein a status value of the effective time period refers to a time period during which an execution effect corresponding to the action effect resource needs to be monitored; and
continuing (S808) an execution of the first action resource and terminating an execution of the second action resource, in response to a current time instant falling within the effective time period of the first action resource; or
executing (S809) the second action resource and terminating an execution of the first action resource, in response to a current time instant falling within the effective time period of the second action resource.

3. The method of claim 1, wherein the first action effect information further comprises a first effect predicted achievement period, and
wherein the determining an estimated achievement value at a current time instant according to the first effect initial value and the first effect target value comprises:
determining an estimated achievement effect according to the first effect initial value, the first effect target value, the first effect predicted achievement period and the first effect monitor period; and
determining the estimated achievement value at the current time instant according to the estimated achievement effect and a time difference between the current time instant and an initial time instant, wherein the initial time instant is a time instant of transmitting the execution instruction in the first action resource.

4. The method of claim 1, wherein the first action effect information further comprises a first effect control parameter, and
wherein the determining whether the first execution effect is out of control or under control according to a relationship between the updated first effect current value and the estimated achievement value at the current time instant comprises:
determining an upper limit of the estimated achievement value at the current time instant and a lower limit of the estimated achievement value at the current time instant according to the estimated achievement value at the current time instant and the first effect control parameter in the first action effect information; and
determining whether the first execution effect is out of control or not according to a relationship between the updated first effect current value and the upper limit of the estimated achievement value at the current time instant and a relationship between the updated first effect current value and the lower limit of the estimated achievement value at the current time instant.

5. The method of claim 1, wherein the first action resource further comprises a second action effect information, and
wherein the method further comprises receiving (S707) second monitoring data provided by a second sensor, and
wherein the monitoring a first execution effect of the first intelligent device related with the first action resource according to the first monitoring data and turning off the first intelligent device according to the first execution effect comprises:
monitoring (S708) a second execution effect of the first intelligent device related with the first action resource according to the second monitoring data, and updating the second action effect information in the first action resource corresponding to the second execution effect; and
determining (S709) that the second execution effect is out of control and turning off the first intelligent device according to the second execution effect, in response to a difference between the second execution effect and a preset effect exceeding a preset range.

6. The method of claim 1, further comprising: triggering a second action resource by the received first monitoring data provided by the first sensor, wherein the second action resource comprises a third action effect information, and the third action effect information comprises a second effect target value, and
wherein the method further comprises:
determining (S907) a first effect trend corresponding to the first action resource according to a trigger condition in the first action resource and the first effect target value in the first action effect information in the first action resource, and determining a second effect trend corresponding to the second action resource according to a trigger condition in the second action resource and the second effect target value in the third action effect information in the second action resource; and
determining (S908) whether a status value of a no-same-effect parameter in the second action resource is True or not and whether a status value of a no-opposite-effect parameter is False or not, in response to the first effect trend corresponding to the first action resource being opposite to the second effect trend corresponding to the second action resource;
determining (S909) whether an execution object in the first action resource is the same as an execution object in the second action resource, in response to determining that the status value of the no-same-effect parameter is True and the status value of the no-opposite-effect parameter is False; and
continuing (S910) an execution of the first action resource and terminating an execution of the second action resource, in response to determining that the execution object in the first action resource is the same as the execution object in the second action resource; or
continuing (S911) an execution of the first action resource and starting an execution of the second action resource, in response to determining that the execution object in the first action resource is different from the execution object in the second action resource.

7. The method of claim 1, wherein the first action effect information is stored as a sub-resource of the first action resource, or as a parameter of the first action resource, and
the trigger condition in the first action resource is stored as a parameter of the first action resource, and
wherein the first action resource further comprises a first verification information, and the first verification information is stored as a sub-resource of the first action resource.

8. The method of claim 1, further comprising: receiving a trigger instruction input by a user, and extracting the preset target monitoring value from the received trigger instruction.

9. An intelligent gateway, comprising:
a processor; and
a memory communicatively connected to the processor, wherein at least one instruction is stored in the memory, and the at least one instruction, when executed by the processor, is configured to cause the processor to implement the method of controlling the intelligent device of any one of claims 1 to 8.

10. A system of controlling an intelligent device, comprising:
the intelligent gateway of claim 9;
a first sensor communicatively connected to the intelligent gateway and configured to continuously acquire first monitoring data and transmit the first monitoring data to the intelligent gateway; and
a terminal device communicatively connected to the intelligent gateway and configured to provide a trigger instruction to the intelligent gateway, wherein the trigger instruction contains a target monitoring value of the same type as the monitoring data.

11. The system of claim 10, further comprising:
a second sensor communicatively connected to the intelligent gateway and configured to continuously acquire second monitoring data and transmit the second monitoring data to the intelligent gateway.

12. A computer-readable storage medium having a computer program therein, wherein the computer program, when executed by a processor, is configured to cause the processor to implement the method of controlling the intelligent device of any one of claims 1 to 8.

## Patentansprüche

1. Verfahren zum Steuern einer intelligenten Vorrichtung, aufweisend:
Empfangen (S201) erster Überwachungsdaten, die von einem ersten Sensor vorgesehen werden;
Bestimmen (S202) einer Beziehung zwischen den ersten Überwachungsdaten und einem voreingestellten Zielüberwachungswert;
Bestimmen einer Aktionsressource aus mehreren voreingestellten Aktionsressourcen, die eine Auslösebedingung enthält, die mit der Beziehung übereinstimmt, als eine erste Aktionsressource;
Extrahieren (S203) einer Ausführungsanweisung aus der ersten Aktionsressource und Übertragen der Ausführungsanweisung an eine erste intelligente Vorrichtung, die mit der ersten Aktionsressource in Beziehung steht; und
Überwachen (S204) eines ersten Ausführungseffekts der ersten intelligenten Vorrichtung, die gemäß den ersten Überwachungsdaten mit der ersten Aktionsressource in Beziehung steht, und Einschalten einer zweiten intelligenten Vorrichtung, die mit der ersten intelligenten Vorrichtung in Beziehung steht, oder Ausschalten der ersten intelligenten Vorrichtung gemäß dem ersten Ausführungseffekt,
wobei die Aktionsressource einen Aktionsressourcenparameter und eine Aktionseffektressource enthält, der Aktionsressourcenparameter eine Auslösebedingung der Aktionsressource, eine Ausführungsanweisung der Aktionsressource und ein Ausführungsobjekt der Aktionsressource aufweist und die Aktionseffektressource mindestens eines von Folgendem aufweist: eine Effektressourcenidentifikation, einen Anfangseffektwert, einen aktuellen Effektwert, einen Effektzielwert, eine Effektüberwachungszeitspanne, eine voraussichtliche Effekterreichungszeitspanne, einen Nicht-linear-Effekt-Parameter, einen Effektsteuerungsparameter, einen Effektsteuerungstrend, einen Zugehörige-Vorrichtung-beteiligt-Schalter oder einen Zugehörige-Aktion-beteiligt-Schalter, eine Zugehörige-Vorrichtung-beteiligt-Liste oder eine Zugehörige-Aktion-beteiligt-Liste, eine Zugehörige-Vorrichtung-beteiligt-Einstellung oder eine Zugehörige-Aktion-beteiligt-Einstellung, einen Umkehraktionsschalter oder eine effektive Zeitspanne,
wobei die erste Aktionsressource erste Aktionseffektinformationen aufweist und die ersten Aktionseffektinformationen eine erste Effektüberwachungszeitspanne, einen ersten Anfangseffektwert, einen ersten aktuellen Effektwert, einen ersten Effektzielwert und einen ersten Effektsteuerungstrend aufweisen, und
wobei das Überwachen eines ersten Ausführungseffekts der ersten intelligenten Vorrichtung, die mit der ersten Aktionsressource gemäß den ersten Überwachungsdaten in Beziehung steht, umfasst:
Aktualisieren des ersten Anfangseffektwerts in den ersten Aktionseffektinformationen gemäß den ersten Überwachungsdaten und Aktualisieren des ersten Effektzielwerts in den ersten Aktionseffektinformationen gemäß dem Zielüberwachungswert;
Empfangen der ersten Überwachungsdaten gemäß der ersten Effektüberwachungszeitspanne in den ersten Aktionseffektinformationen, Aktualisieren des ersten aktuellen Effektwerts in den ersten Aktionseffektinformationen gemäß den empfangenen ersten Überwachungsdaten, Bestimmen eines geschätzten Erreichungswerts zu einem aktuellen Zeitpunkt gemäß dem ersten Anfangseffektwert und dem ersten Effektzielwert, Bestimmen, ob der erste Ausführungseffekt gemäß einer Beziehung zwischen dem aktualisierten ersten aktuellen Effektwert und dem geschätzten Erreichungswert zum aktuellen Zeitpunkt außer Kontrolle oder unter Kontrolle ist, und Aktualisieren eines Bestimmungsergebnisses auf einen Statuswert des ersten Effektsteuerungstrends in den ersten Aktionseffektinformationen; und
Fortsetzen der Durchführung eines nächsten Erkennungszyklus als Reaktion darauf, dass bestimmt wird, dass der erste Ausführungseffekt unter Kontrolle ist; oder
Einschalten der zweiten intelligenten Vorrichtung oder Auswählen einer anderen Aktionsressource aus den mehreren voreingestellten Aktionsressourcen als erste Aktionsressource gemäß dem ersten Ausführungseffekt als Reaktion darauf, dass bestimmt wird, dass der erste Ausführungseffekt außer Kontrolle ist.

2. Verfahren nach Anspruch 1, ferner aufweisend:
Extrahieren (S807) einer effektiven Zeitspanne einer zweiten Aktionsressource aus der zweiten Aktionsressource und Extrahieren einer effektiven Zeitspanne der ersten Aktionsressource aus der ersten Aktionsressource als Reaktion darauf, dass die ersten Überwachungsdaten, die von dem ersten Sensor vorgesehen werden, die zweite Aktionsressource auslösen, wobei sich ein Statuswert der effektiven Zeitspanne auf eine Zeitspanne bezieht, während der ein Ausführungseffekt, der der Aktionseffektressource entspricht, überwacht werden muss; und
Fortsetzen (S808) einer Ausführung der ersten Aktionsressource und Beenden einer Ausführung der zweiten Aktionsressource als Reaktion darauf, dass ein aktueller Zeitpunkt in die effektive Zeitspanne der ersten Aktionsressource fällt; oder
Ausführen (S809) der zweiten Aktionsressource und Beenden einer Ausführung der ersten Aktionsressource als Reaktion darauf, dass ein aktueller Zeitpunkt in die effektive Zeitspanne der zweiten Aktionsressource fällt.

3. Verfahren nach Anspruch 1, wobei die ersten Aktionseffektinformationen ferner eine erste voraussichtlichen Effekterreichungszeitspanne aufweisen, und
wobei das Bestimmen eines geschätzten Erreichungswerts zu einem aktuellen Zeitpunkt gemäß dem ersten Anfangseffektwert und dem ersten Effektzielwert umfasst:
Bestimmen eines geschätzten Erreichungseffekts gemäß dem ersten Anfangseffektwert, dem ersten Effektzielwert, der ersten voraussichtlichen Effekterreichungszeitspanne und der ersten Effektüberwachungszeitspanne; und
Bestimmen des geschätzten Erreichungswerts zum aktuellen Zeitpunkt gemäß dem geschätzten Erreichungseffekt und einer Zeitdifferenz zwischen dem aktuellen Zeitpunkt und einem Anfangszeitpunkt, wobei der Anfangszeitpunkt ein Zeitpunkt des Übertragens der Ausführungsanweisung in der ersten Aktionsressource ist.

4. Verfahren nach Anspruch 1, wobei die ersten Aktionseffektinformationen ferner einen ersten Effektsteuerungsparameter aufweisen, und
wobei das Bestimmen, ob der erste Ausführungseffekt außer Kontrolle oder unter Kontrolle ist, gemäß einer Beziehung zwischen dem aktualisierten ersten aktuellen Effektwert und dem geschätzten Erreichungswert zum aktuellen Zeitpunkt umfasst:
Bestimmen einer Obergrenze des geschätzten Erreichungswerts zum aktuellen Zeitpunkt und einer Untergrenze des geschätzten Erreichungswerts zum aktuellen Zeitpunkt gemäß dem geschätzten Erreichungswert zum aktuellen Zeitpunkt und dem ersten Effektsteuerungsparameter in den ersten Aktionseffektinformationen; und
Bestimmen, ob der erste Ausführungseffekt außer Kontrolle ist oder nicht, gemäß einer Beziehung zwischen dem aktualisierten ersten aktuellen Effektwert und der Obergrenze des geschätzten Erreichungswerts zum aktuellen Zeitpunkt und einer Beziehung zwischen dem aktualisierten ersten aktuellen Effektwert und der Untergrenze des geschätzten Erreichungswerts zum aktuellen Zeitpunkt.

5. Verfahren nach Anspruch 1, wobei die erste Aktionsressource ferner zweite Aktionseffektinformationen aufweist, und
wobei das Verfahren ferner ein Empfangen (S707) von zweiten Überwachungsdaten umfasst, die von einem zweiten Sensor vorgesehen werden, und
wobei das Überwachen eines ersten Ausführungseffekts der ersten intelligenten Vorrichtung, die mit der ersten Aktionsressource in Beziehung steht, gemäß den ersten Überwachungsdaten und das Ausschalten der ersten intelligenten Vorrichtung gemäß dem ersten Ausführungseffekt umfasst:
Überwachen (S708) eines zweiten Ausführungseffekts der ersten intelligenten Vorrichtung, die mit der ersten Aktionsressource in Beziehung steht, gemäß den zweiten Überwachungsdaten und Aktualisieren der zweiten Aktionseffektinformationen in der ersten Aktionsressource entsprechend dem zweiten Ausführungseffekt; und
Bestimmen (S709), dass der zweite Ausführungseffekt außer Kontrolle ist, und Ausschalten der ersten intelligenten Vorrichtung gemäß dem zweiten Ausführungseffekt als Reaktion darauf, dass eine Differenz zwischen dem zweiten Ausführungseffekt und einem voreingestellten Effekt einen voreingestellten Bereich überschreitet.

6. Verfahren nach Anspruch 1, ferner umfassend: Auslösen einer zweiten Aktionsressource durch die empfangenen ersten Überwachungsdaten, die von dem ersten Sensor vorgesehen werden, wobei die zweite Aktionsressource dritte Aktionseffektinformationen aufweist und die dritten Aktionseffektinformationen einen zweiten Effektzielwert aufweisen, und
wobei das Verfahren ferner umfasst:
Bestimmen (S907) eines ersten Effekttrends, der der ersten Aktionsressource entspricht, gemäß einer Auslösebedingung in der ersten Aktionsressource und dem ersten Effektzielwert in den ersten Aktionseffektinformationen in der ersten Aktionsressource, und Bestimmen eines zweiten Effekttrends, der der zweiten Aktionsressource entspricht, gemäß einer Auslösebedingung in der zweiten Aktionsressource und dem zweiten Effektzielwert in den dritten Aktionseffektinformationen in der zweiten Aktionsressource; und
Bestimmen (S908), ob ein Statuswert eines Kein-gleicher-Effekt-Parameters in der zweiten Aktionsressource Wahr ist oder nicht und ob ein Statuswert eines Kein-entgegengesetzter-Effekt-Parameters Falsch ist oder nicht, als Reaktion darauf, dass der erste Effekttrend, der der ersten Aktionsressource entspricht, dem zweiten Effekttrend, der der zweiten Aktionsressource entspricht, entgegengesetzt ist;
Bestimmen (S909), ob ein Ausführungsobjekt in der ersten Aktionsressource das gleiche ist wie ein Ausführungsobjekt in der zweiten Aktionsressource, als Reaktion darauf, dass bestimmt wird, dass der Statuswert des Kein-gleicher-Effekt-Parameters Wahr ist und der Statuswert des Kein-entgegengesetzter-Effekt-Parameters Falsch ist; und
Fortsetzen (S910) einer Ausführung der ersten Aktionsressource und Beenden einer Ausführung der zweiten Aktionsressource als Reaktion darauf, dass bestimmt wird, dass das Ausführungsobjekt in der ersten Aktionsressource das gleiche ist, wie das Ausführungsobjekt in der zweiten Aktionsressource; oder
Fortsetzen (S911) einer Ausführung der ersten Aktionsressource und Starten einer Ausführung der zweiten Aktionsressource als Reaktion darauf, dass bestimmt wird, dass das Ausführungsobjekt in der ersten Aktionsressource sich von dem Ausführungsobjekt in der zweiten Aktionsressource unterscheidet.

7. Verfahren nach Anspruch 1, wobei die ersten Aktionseffektinformationen als Unterressource der ersten Aktionsressource oder als Parameter der ersten Aktionsressource gespeichert werden, und
die Auslösebedingung in der ersten Aktionsressource als Parameter der ersten Aktionsressource gespeichert wird, und
wobei die erste Aktionsressource ferner erste Verifizierungsinformationen aufweist und die ersten Verifizierungsinformationen als Unterressource der ersten Aktionsressource gespeichert werden.

8. Verfahren nach Anspruch 1, ferner umfassend: Empfangen einer Auslöseanweisung, die von einem Benutzer eingegeben wird, und Extrahieren des voreingestellten Zielüberwachungswerts aus der empfangenen Auslöseanweisung.

9. Intelligentes Gateway, aufweisend:
einen Prozessor; und
einen Speicher, der mit dem Prozessor kommunikativ verbunden ist, wobei mindestens eine Anweisung in dem Speicher gespeichert wird und die mindestens eine Anweisung, wenn sie von dem Prozessor ausgeführt wird, konfiguriert ist, um den Prozessor zu veranlassen, das Verfahren zum Steuern der intelligenten Vorrichtung nach einem der Ansprüche 1 bis 8 auszuführen.

10. System zum Steuern einer intelligenten Vorrichtung, aufweisend:
das intelligente Gateway nach Anspruch 9;
einen ersten Sensor, der mit dem intelligenten Gateway kommunikativ verbunden ist und konfiguriert ist, um kontinuierlich erste Überwachungsdaten zu erfassen und die ersten Überwachungsdaten an das intelligente Gateway zu übertragen; und
eine Endgerätvorrichtung, die mit dem intelligenten Gateway kommunikativ verbunden ist und konfiguriert ist, um eine Auslöseanweisung für das intelligente Gateway vorzusehen, wobei die Auslöseanweisung einen Zielüberwachungswert desselben Typs wie die Überwachungsdaten enthält.

11. System nach Anspruch 10, ferner aufweisend:
einen zweiten Sensor, der mit dem intelligenten Gateway kommunikativ verbunden ist und konfiguriert ist, um kontinuierlich zweite Überwachungsdaten zu erfassen und die zweiten Überwachungsdaten an das intelligente Gateway zu übertragen.

12. Computerlesbares Speichermedium mit einem darauf gespeicherten Computerprogramm, wobei das Computerprogramm, wenn es von einem Prozessor ausgeführt wird, konfiguriert ist, um den Prozessor zu veranlassen, das Verfahren zum Steuern der intelligenten Vorrichtung nach einem der Ansprüche 1 bis 8 auszuführen.

## Revendications

1. Procédé de commande d'un dispositif intelligent, comprenant :
la réception (S201) de premières données de surveillance fournies par un premier capteur ;
la détermination (S202) d'une relation entre les premières données de surveillance et une valeur de surveillance cible prédéterminée ;
la détermination, à partir d'une pluralité de ressources d'action prédéterminées, d'une ressource d'action contenant une condition de déclenchement assortie à la relation comme une première ressource d'action ;
l'extraction (S203) d'une instruction d'exécution de la première ressource d'action, et la transmission de l'instruction d'exécution à un premier dispositif intelligent lié à la première ressource d'action ; et
la surveillance (S204) d'un premier effet d'exécution du premier dispositif intelligent lié à la première ressource d'action conformément aux premières données de surveillance, et la mise en marche d'un second dispositif intelligent lié au premier dispositif intelligent ou l'arrêt du premier dispositif intelligent conformément au premier effet d'exécution,
dans lequel la ressource d'action contient un paramètre de ressource d'action et une ressource d'effet d'action, le paramètre de ressource d'action comprend une condition de déclenchement de la ressource d'action, une instruction d'exécution de la ressource d'action et un objet d'exécution de la ressource d'action, et la ressource d'effet d'action comprend au moins un parmi : une identification de ressource d'effet, une valeur initiale d'effet, une valeur actuelle d'effet, une valeur cible d'effet, une période de surveillance d'effet, une période d'achèvement prédit d'effet, un paramètre d'effet non-linéaire, un paramètre de contrôle d'effet, une tendance de contrôle d'effet, un commutateur associé à un dispositif lié ou commutateur associé à une action liée, une liste associée à un dispositif lié ou liste associée à une action liée, un réglage associé à un dispositif lié ou réglage associé à une action liée, un commutateur d'inversion, ou une période de temps effective,
dans lequel la première ressource d'action comprend une première information d'effet d'action, et la première information d'effet d'action comprend une première période de surveillance d'effet, une première valeur initiale d'effet, une première valeur actuelle d'effet, une première valeur cible d'effet et une première tendance de contrôle d'effet, et
dans lequel la surveillance d'un premier effet d'exécution du premier dispositif intelligent lié à la première ressource d'action conformément aux premières données de surveillance comprend :
la mise à jour de la première valeur initiale d'effet dans la première information d'effet d'action conformément aux premières données de surveillance, et la mise à jour de la première valeur cible d'effet dans la première information d'effet d'action conformément à la valeur de surveillance cible ;
la réception des premières données de surveillance conformément à la première période de surveillance d'effet dans la première information d'effet d'action, la mise à jour de la première valeur actuelle d'effet dans la première information d'effet d'action conformément aux premières données de surveillance reçues, la détermination d'une valeur d'achèvement estimée à un instant actuel conformément à la première valeur initiale d'effet et à la première valeur cible d'effet, la détermination si le premier effet d'exécution est hors de contrôle ou sous contrôle conformément à une relation entre la première valeur actuelle d'effet mise à jour et la valeur d'achèvement estimée à l'instant actuel, et la mise à jour d'un résultat de détermination à une valeur d'état de la première tendance de contrôle d'effet dans la première information d'effet d'action ; et
la poursuite de l'exécution d'un cycle suivant de détection en réponse à la détermination que le premier effet d'exécution est sous contrôle ; ou
la mise en marche du second dispositif intelligent ou sélection d'une autre ressource d'action de la pluralité de ressources d'action prédéterminées comme première ressource d'action conformément au premier effet d'exécution, en réponse à la détermination que le premier effet d'exécution est hors de contrôle.

2. Procédé selon la revendication 1, comprenant en outre :
l'extraction (S807) d'une période de temps effective d'une seconde ressource d'action à partir de la seconde ressource d'action et extraction d'une période de temps effective de la première ressource d'action à partir de la première ressource d'action, en réponse aux premières données de surveillance fournies par le premier capteur déclenchant la seconde ressource d'action, dans lequel une valeur d'état de la période de temps effective se réfère à une période de temps pendant laquelle un effet d'exécution correspondant à la ressource d'effet d'action doit faire l'objet d'une surveillance ; et
la poursuite (S808) d'une exécution de la première ressource d'action et interruption d'une exécution de la seconde ressource d'action, en réponse à un instant actuel compris dans la période de temps effective de la première ressource d'action ; ou
l'exécution (S809) de la seconde ressource d'action et interruption d'une exécution de la première ressource d'action, en réponse à un instant actuel compris dans la période de temps effective de la seconde ressource d'action.

3. Procédé selon la revendication 1, dans lequel la première information d'effet d'action comprend en outre une première période d'achèvement prédit d'effet, et
dans lequel la détermination d'une valeur d'achèvement estimée à un instant actuel conformément à la première valeur initiale d'effet et à la première valeur cible d'effet comprend :
la détermination d'un effet d'achèvement estimé conformément à la première valeur initiale d'effet, à la première valeur cible d'effet, à la première période d'achèvement prédit d'effet et à la première période de surveillance d'effet ; et
la détermination de la valeur d'achèvement estimée à l'instant actuel conformément à l'effet d'achèvement estimé et à une différence de temps entre l'instant actuel et un instant initial, dans lequel l'instant initial est un instant de transmission de l'instruction d'exécution dans la première ressource d'action.

4. Procédé selon la revendication 1, dans lequel la première information d'effet d'action comprend en outre un premier paramètre de contrôle d'effet, et
dans lequel la détermination si le premier effet d'exécution est hors de contrôle ou sous contrôle conformément à une relation entre la première valeur actuelle d'effet mise à jour et la valeur d'achèvement estimée à l'instant actuel comprend :
la détermination d'une limite supérieure de la valeur d'achèvement estimée à l'instant actuel et d'une limite inférieure de la valeur d'achèvement estimée à l'instant actuel conformément à la valeur d'achèvement estimée à l'instant actuel et au premier paramètre de contrôle d'effet dans la première information d'effet d'action ; et
la détermination si le premier effet d'exécution est hors de contrôle ou non conformément à une relation entre la première valeur actuelle d'effet mise à jour et la limite supérieure de la valeur d'achèvement estimée à l'instant actuel et une relation entre la première valeur actuelle d'effet mise à jour et la limite inférieure de la valeur d'achèvement estimée à l'instant actuel.

5. Procédé selon la revendication 1, dans lequel la première ressource d'action comprend en outre une seconde information d'effet d'action, et
dans lequel le procédé comprend en outre la réception (S707) de secondes données de surveillance fournies par un second capteur, et
dans lequel la surveillance d'un premier effet d'exécution du premier dispositif intelligent lié à la première ressource d'action conformément aux premières données de surveillance et l'arrêt du premier dispositif intelligent conformément au premier effet d'exécution comprend :
la surveillance (S708) d'un second effet d'exécution du premier dispositif intelligent lié à la première ressource d'action conformément aux secondes données de surveillance, et la mise à jour de la seconde information d'effet d'action dans la première ressource d'action correspondant au second effet d'exécution ; et
la détermination (S709) que le second effet d'exécution est hors de contrôle et l'arrêt du premier dispositif intelligent conformément au second effet d'exécution, en réponse à une différence entre le second effet d'exécution et un effet prédéterminé dépassant une plage prédéterminée.

6. Procédé selon la revendication 1, comprenant en outre : le déclenchement d'une seconde ressource d'action par les premières données de surveillance reçues fournies par le premier capteur, dans lequel la seconde ressource d'action comprend une troisième information d'effet d'action, et la troisième information d'effet d'action comprend une seconde valeur cible d'effet, et
dans lequel le procédé comprend en outre :
la détermination (S907) d'une première tendance d'effet correspondant à la première ressource d'action conformément à une condition de déclenchement dans la première ressource d'action et à la première valeur cible d'effet dans la première information d'effet d'action dans la première ressource d'action, et la détermination d'une seconde tendance d'effet correspondant à la seconde ressource d'action conformément à une condition de déclenchement dans la seconde ressource d'action et à la seconde valeur cible d'effet dans la troisième information d'effet d'action dans la seconde ressource d'action ; et
la détermination (S908) si une valeur d'état d'un paramètre pas d'effet identique dans la seconde ressource d'action est Vrai ou non et si une valeur d'état d'un paramètre pas d'effet inverse est Faux ou non, en réponse à la première tendance d'effet correspondant à la première ressource d'action opposée à la seconde tendance d'effet correspondant à la seconde ressource d'action ;
la détermination (S909) si un objet d'exécution dans la première ressource d'action est le même qu'un objet d'exécution dans la seconde ressource d'action, en réponse à la détermination que la valeur d'état du paramètre pas d'effet identique est Vrai et que la valeur d'état du paramètre pas d'effet inverse est Faux ; et
la poursuite (S910) d'une exécution de la première ressource d'action et l'interruption d'une exécution de la seconde ressource d'action, en réponse à la détermination que l'objet d'exécution dans la première ressource d'action est le même que l'objet d'exécution dans la seconde ressource d'action ; ou
la poursuite (S911) d'une exécution de la première ressource d'action et le démarrage d'une exécution de la seconde ressource d'action, en réponse à la détermination que l'objet d'exécution dans la première ressource d'action est différent de l'objet d'exécution dans la seconde ressource d'action.

7. Procédé selon la revendication 1, dans lequel la première information d'effet d'action est enregistrée comme sous-ressource de la première ressource d'action, ou comme paramètre de la première ressource d'action, et
la condition de déclenchement dans la première ressource d'action est enregistrée comme paramètre de la première ressource d'action, et
dans lequel la première ressource d'action comprend en outre une première information de vérification, et la première information de vérification est enregistrée comme sous-ressource de la première ressource d'action.

8. Procédé selon la revendication 1, comprenant en outre : la réception d'une entrée d'instruction de déclenchement par un utilisateur, et l'extraction de la valeur de surveillance cible prédéterminée de l'instruction de déclenchement reçue.

9. Passerelle intelligente, comprenant :
un processeur ; et
une mémoire connectée de manière communicante au processeur, dans laquelle au moins une instruction est enregistrée dans la mémoire, et l'au moins une instruction, lorsqu'elle est exécutée par le processeur, est configurée pour faire en sorte que le processeur implémente le procédé de commande du dispositif intelligent selon l'une des revendications 1 à 8.

10. Système de commande d'un dispositif intelligent, comprenant :
la passerelle intelligente selon la revendication 9 ;
un premier capteur connecté de manière communicante à la passerelle intelligente et configuré pour acquérir en continu de premières données de surveillance et transmettre les premières données de surveillance à la passerelle intelligente ; et
un dispositif terminal connecté de manière communicante à la passerelle intelligente et configuré pour fournir une instruction de déclenchement à la passerelle intelligente, dans lequel l'instruction de déclenchement contient une valeur de surveillance cible du même type que les données de surveillance.

11. Système selon la revendication 10, comprenant en outre :
un second capteur connecté de manière communicante à la passerelle intelligente et configuré pour acquérir en continu des secondes données de surveillance et transmettre les secondes données de surveillance à la passerelle intelligente.

12. Support de stockage lisible par ordinateur contenant un programme informatique, dans lequel le programme informatique, lorsqu'il est exécuté par un processeur, est configuré pour faire en sorte que le processeur implémente le procédé de commande du dispositif intelligent selon l'une des revendications 1 à 8.
